(19) Europäisches Patentamt / European Patent Office / Office européen des brevets

(11) **EP 3 577 494 B1**

## (12) FASCICULE DE BREVET EUROPEEN

(45) Date de publication et mention de la délivrance du brevet:
**19.05.2021 Bulletin 2021/20**

(21) Numéro de dépôt: **18705437.4**

(22) Date de dépôt: **30.01.2018**

(51) Int Cl.:
***G01S 19/14*** *(2010.01)* ***G08G 3/00*** *(2006.01)*

(86) Numéro de dépôt international:
**PCT/FR2018/050209**

(87) Numéro de publication internationale:
**WO 2018/142056 (09.08.2018 Gazette 2018/32)**

(54) **BALISE, SYSTÈME ET PROCÉDÉ D'AIDE À LA NAVIGATION DE PRÉCISION**

BAKE, SYSTEM UND VERFAHREN ZUR UNTERSTÜTZUNG DER PRÄZISIONSNAVIGATION

BEACON, SYSTEM AND METHOD FOR ASSISTING PRECISION NAVIGATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2017 FR 1750808**

(43) Date de publication de la demande:
**11.12.2019 Bulletin 2019/50**

(73) Titulaire: **CADDEN**
**44300 Nantes (FR)**

(72) Inventeur: **DANDEC, Gilles**
**44200 Nantes (FR)**

(74) Mandataire: **Benech, Frédéric**
**Cabinet Benech**
**15, rue d'Astorg**
**75008 Paris (FR)**

(56) Documents cités:
**US-A- 5 933 110**

- **MAARTEN BETLEM: "Contirbution Dutch Pilot Association", SEMINAR OF THE HYDROGRAPHIC SOCIETY: PPUS AND ELECTRONIC CHARTS - WHAT DOES THE USER REALLY NEEDS?, 12 mai 2011 (2011-05-12), XP055426776, Southhampton, UK**
- **Fugro: "Equipment Flyer: Fugro - Pilotstar Berting Aid System", , 1 avril 2016 (2016-04-01), XP055426792, Extrait de l'Internet: URL:https://www.fugro.com/Widgets/MediaResourcesList/MediaResourceDownloadHandler.ashx?guid=582170f1-f3db-6785-9f9d-ff250019aa6e&culture=en [extrait le 2017-11-20]**

EP 3 577 494 B1

**Description**

La présente invention concerne une balise d'aide à la navigation maritime de précision.

Elle concerne également un système mettant en œuvre une telle balise ainsi qu'un procédé mettant en œuvre un tel système.

Lorsqu'un navire s'approche d'un port ou accoste, ou lors d'opérations de navigation dans une voie maritime présentant des difficultés ou des dangers, il est souvent fait appel par le commandant du navire à un pilote de port, amené à bord pour le conseiller et l'assister dans la conduite du navire.

Ceci est d'autant plus nécessaire pour la navigation des navires à fort tonnage ou de grandes dimensions, voire très grandes dimensions (longueur supérieure à 150 m), en considération notamment des particularités d'approche de chaque port, de la faible maniabilité et de l'inertie de ces bâtiments en mer.

A titre d'exemple, certains grands navires de plus de 500 000 tonnes coupent la propulsion par moteur à plus de 25km du point d'arrivée et mettent plus de 15 min pour faire un demi-tour en pleine mer.

La réglementation internationale impose le recours à des pilotes de port dans certaines situations ou pour certains types de navires.

L'expérience du pilote concernant les lieux et/ou les opérations délicates d'accostages est donc primordiale, du fait des difficultés de jugement qui existent en l'absence d'indications fiables et de la faillibilité de l'être humain.

L'invention trouve une application particulièrement importante, bien que non exclusive dans le domaine de la navigation maritime de précision des grands bâtiments, en particulier mais non exclusivement, en cas de situations expérimentées en espace restreint, et/ou pour des opérations de rapprochement du navire d'un obstacle physique, immobile ou non, notamment d'un quai ou d'un autre navire le croisant.

Une telle invention peut également être utilisée pour toute situation de navigation nécessitant une précision d'approche la plus grande possible, en particulier inférieure à de l'ordre du centimètre.

Les contraintes techniques au regard de la sécurité des biens et des personnes, ainsi que la responsabilité souvent pénale des pilotes pouvant être engagée en cas de fausses manœuvres nécessitent des informations de grande précision sur le comportement du navire, en particulier lors de la phase finale d'approche d'un quai, d'une berge ou lors d'un croisement de navire.

Du fait de l'inhomogénéité des systèmes de navigation entre les différents navires, du temps relativement court pour que le pilote les prenne en main pour accoster, et de la responsabilité dudit pilote, il est connu que celui-ci dispose de son propre matériel de guidage, comprenant des balises notamment interconnectées par câbles, qu'il embarque à bord lors de son arrivée sur le navire.

Or les systèmes connus de balises embarqués par le pilote se révèlent peu maniables, ce qui peut notamment engendrer des difficultés d'installation et de positionnement des balises, en particulier en cas de conditions météorologiques difficiles.

Le document MAARTEN BETLEM: "Contirbution Dutch Pilot Association", SEMINAR OF THE HYDROGRAPHIC SOCIETY: PPUS AND ELECTRONIC CHARTS - WHAT DOES THE USER REALLY NEEDS, Southhampton, UK, décrit par exemple une balise portable amovible pour système de navigation maritime de précision d'un navire comprenant un récepteur RTK et différents moyens de communication.

On connaît ainsi des systèmes comportant des éléments reliés entre eux par des câbles. De tels systèmes, s'ils délivrent en général des signaux peu parasités, sont cependant d'une portée réduite à la longueur du câble de connexion, n'offrant pas alors de flexibilité permettant par exemple un éloignement satisfaisant des balises les unes par rapport aux autres.

Cela est d'autant plus problématique que la précision des informations finales dépend de la qualité du positionnement initial des balises.

Il apparaît donc que la maniabilité des balises et la qualité et la précision des informations délivrées par ce genre de système peuvent encore être améliorées et/ou complétées.

D'autres dispositifs de guidage de navire dans lesquels on a cherché à s'affranchir des liaisons par câble et comportant plusieurs balises (au moins trois balises) ont alors été proposés.

De tels dispositifs présentent cependant toujours des inconvénients.

En effet, ils se révèlent peu maniables par un opérateur et délicats à installer sur le navire, ce qui allonge les opérations de prise en main du pilotage du navire et diminue la sécurité des opérations.

Or, un gain de temps de manœuvre, tout en augmentant la sécurité, est toujours un objectif recherché.

De plus, ils ne délivrent pas toujours les informations de manière suffisamment fiable, du fait notamment d'interférences et de pertes de signal entre les balises et/ou le terminal.

Il en résulte un risque de voir le pilote ne pas réagir dans des temps compatibles avec les réactions du navire en toute sécurité.

La présente invention vise à pallier ces inconvénients en proposant une balise à haute performance, autonome et non reliée de façon filaire avec le reste du système, comprenant une capacité de communication rendant non seulement les mesures plus performantes mais également disponibles, quasiment en temps réel ou pour un temps inférieur à la seconde.

Pour ce faire elle propose une balise, un système et un procédé ne mettant en œuvre que deux balises répondant mieux que ceux antérieurement connus aux exigences de la pratique, notamment en ce qu'elle permet une installation et une manipulation aisée et précise, notamment du fait de son caractère compact facilitant sa manipulation manuelle par un opérateur et ce tout en autorisant des moyens de communication en entrée/sortie nombreux, fiables et rapides.

Cette disponibilité des données et leur grande précision autorisent des traitements et des calculs de nouvelles informations antérieurement non exploitables comme notamment la mesure/prévision des phénomènes de squat dans des conditions opérationnelles.

Le squat est un phénomène hydrodynamique de sur-enfoncement des navires en particulier en eau peu profonde. Il est à l'origine de nombreuses perturbations pour le navire et de nombreux accidents maritimes.

Le navire au repos a un certain enfoncement par rapport au niveau de l'eau dit enfoncement statique. Cet enfoncement statique est plus connu sous le nom de tirant d'eau du navire. La pression qui supporte le poids du navire diminue avec l'augmentation de la vitesse de l'écoulement le long de la coque. Il s'ensuit un enfoncement supplémentaire avec éventuellement une modification de l'assiette.

L'enfoncement d'un navire en mouvement résulte donc de l'enfoncement statique et du sur-enfoncement dû au déplacement du navire.

Le squat se mesure notamment en unité de distance d'enfoncement supplémentaire, correspondant principalement au sur-enfoncement.

L'enfoncement dynamique est encore plus important lorsque le navire évolue en zone confinée (zone de hauts fonds, chenal, ...) où apparaissent des phénomènes de blocage accélérant l'eau qui défile le long de la coque.

De nombreux facteurs peuvent ainsi intervenir sur le sur-enfoncement du navire. Ce sont principalement :

- des données environnementales dont par exemple, le vent traversier irrégulier, la variation de la configuration géométrique du fond marin, le confinement (obstruction de l'écoulement autour du navire par le fond, le chenal, les berges, ...), l'envasement du canal, les vents ou les courants de travers ;

- des données géométriques du navire dont par exemple la forme et la taille du navire (coefficient de bloc du navire CB, l'aspiration de l'eau par les hélices et dans une moindre mesure la forme de l'arrière du navire.

- des données de fonctionnement du navire dont par exemple la vitesse du navire (essentiellement la composante longitudinale), la vitesse de dérive du navire, la gîte et le roulis, les mouvements induits par les vagues créées par le navire notamment lorsque sa vitesse est proche du domaine des vitesses critiques.

Il est notamment estimé que le squat varie dans le même sens que la vitesse au carré.

Ainsi, la vitesse du navire étant déterminée grâce à la différence des mesures de positions d'une balise entre deux instants donnés, il existe :

- une erreur de mesure sur la première prise de position de la balise (Err1) ;
- une erreur de mesure sur la deuxième prise de position de la balise(Err2) ;

qui aboutissent, pour le seul paramètre de la vitesse à une imprécision sur le squat de l'ordre de 2* (Err1 + Err1 Err2 + Err2). Soit pour un 1 cm d'erreur en position 6 cm d'erreur sur le squat.

Dans ces conditions, un gain de précision, même apparemment minime (par exemple un gain de précision de moins de 10 % sur une grandeur donnée, ou le fait de passer d'une précision supérieure au centimètre à une précision inférieure au centimètre), entraîne des conséquences très importantes notamment en terme de distance d'arrêt ou de stabilité du navire qui font la différence entre un accident ou non.

La géométrie des navires et leurs conditions d'utilisation n'ont cessé de faire augmenter l'importance du phénomène de squat qui peut atteindre de l'ordre de entre 1.75 m et 2 m, avec les conséquences associées.

L'invention permet d'une part d'améliorer la disponibilité et donc la précision, et d'autre part, d'estimer de manière réellement opérationnelle des phénomènes dont le squat.

L'invention permet de surcroît d'améliorer la précision sur des données de comportement global du navire dont par exemple le roulis, le tangage, le cap et la position et de fournir des informations estimatives de grandeurs jusquelà inaccessibles pour le pilote.

Dans ce but l'invention propose notamment une balise portable amovible pour système de navigation maritime de précision d'un navire, comprenant des moyens d'acquisition et de traitement d'un signal satellite de géolocalisation de la balise et des premiers moyens de communication par ondes électromagnétiques avec une autre balise et/ou avec un calculateur portable muni de moyens d'affichage de données, caractérisée

en ce que elle comporte un boîtier comprenant un socle de fixation magnétique sur la passerelle dudit navire, au moins deux montants dont au moins un de préhension manuelle de la balise par un utilisateur et un chapeau contenant lesdits moyens d'acquisition et de traitement du signal satellite relié audit socle par lesdits montants,

en ce que lesdits premiers moyens de communication aérienne avec l'autre balise et/ou le calculateur comprennent une première antenne électromagnétique placée dans un desdits montants,

en ce qu'elle comporte des deuxièmes moyens de communication aérienne par ondes électromagnétiques, de données de correction de position provenant d'émetteur(s) terrestre(s) entièrement situé(s) à distance, comprenant une deuxième antenne électromagnétique placée dans l'un des dits montants, en ce qu'elle comporte des troisièmes moyens de communication par ondes électromagnétiques de données externes comprenant une troisième antenne également placée dans l'un desdits montants, et

en ce qu'elle comporte des moyens de calcul situés dans le socle de ladite balise,

lesdits moyens de calcul étant agencés pour calculer selon une première période déterminée à partir du signal satellite de géolocalisation de la balise, et des données de correction de position, un signal dit de position corrigée, donnant les coordonnées terrestres de ladite balise avec une précision de positionnement géographique inférieure à 1 cm

ou lesdits moyens de calcul étant agencés pour calculer selon une seconde période déterminée à partir du signal satellite de géolocalisation de la balise et d'un signal corrigé émis par l'autre balise, un signal dit de cap calculé, donnant le cap avec une précision inférieure à 0.1°,

et en ce que les premiers moyens de communication sont agencés pour transmettre le signal obtenu de position corrigée ou de cap au calculateur portable pour calcul et affichage.

Par données externes correspondant au troisième moyen de communication, on entend des données disponibles via un accès à l'internet mobile, pouvant pour une balise de position correspondre ici encore à des données de position, la météo locale ou un marégraphe et pour la balise de cap aux données du trafic local émises par le port ou le lieu de passage : AIS (https://fr.wikipedia.org/wiki/Syst%C3%A8me_d'identification-automatique) .

Les données de navigation sont ainsi et essentiellement le cap et la vitesse du navire en corrélation avec sa position par rapport à son environnement.

Par balise portable on entend plus particulièrement balise déplaçable et manipulable manuellement par un opérateur ce qui implique notamment des dimensions et un poids compatible avec ladite manipulation.

Le fait que les antennes soient placées dans au moins deux montants différents diminue par ailleurs les risques de parasites.

Dans des modes de réalisation particuliers de l'invention, on a de plus et/ou par ailleurs recours à l'une et/ou à l'autre des dispositions suivantes :

- les moyens de calcul sont agencés pour donner le signal de position corrigée ;
- les moyens de calcul sont agencés pour donner le signal de cap ;
- la balise de position ou de cap comporte une centrale inertielle comprenant des moyens de mesure accélérométrique et/ou gyroscopique du mouvement du navire propres à caractériser des données dites d'attitude du navire et les premiers moyens de transmission sont agencés pour transmettre lesdites données d'attitude au calculateur portable ;
- le calculateur est agencé pour calculer le squat à prendre en compte pour le navire à partir desdites données d'attitude ;
  Par donnée d'attitude, on entend les données permettant une adaptation des données de navigation (position, vitesse, cap) telles que notamment le roulis, le tangage, la vitesse de dérive, la dérive, le squat, le mouvement face au vent et d'autres données par exemple la prise au vent du bateau à lège (après déchargement) et toutes ces sortes de données.
- chaque balise comporte au moins trois montants, à savoir un premier montant comprenant la première antenne, un deuxième montant comprenant la deuxième antenne et un troisième montant comprenant la troisième antenne ;
- les moyens d'acquisition et de traitement de signal de géolocalisation sont des moyens d'acquisition GPS, Galileo ou GLONASS sur les fréquences L1 et/ou L2,
- les premiers moyens de communication comprennent une antenne d'émission/réception ultra-haute-fréquence,
- les deuxièmes moyens de communication comprennent une antenne de réception ultra-haute-fréquence et/ou une antenne d'émission/réception GSM,
- les troisièmes moyens de communication comprennent une antenne de réception très haute fréquence, les données externes étant des signaux VTS et/ou AIS ;
- le boîtier de la balise s'inscrit dans un cylindre s'étendant autour d'un axe, ledit cylindre délimitant le socle, le chapeau et l'extérieur des montants, lesdits montants formant respectivement des piliers s'étendant axialement en étant répartis angulairement autour de l'axe et formant entre eux latéralement, sur toute leur hauteur et en leur centre, une ou plusieurs parties ajourées permettant la préhension manuelle par l'utilisateur ;
- le socle comprend des moyens d'alimentation par batterie démontable par encliquetage ;
- le socle comprend des moyens de connexion USB et/ou WIFI, pour mise à jour des paramètres de configuration des moyens de calcul et/ou des premiers, deuxièmes et/ou troisièmes moyens de communication par voie électromagnétique.

L'invention propose également un système mettant en œuvre la balise telle que décrite ci-dessus.

Elle propose aussi un système d'aide à la navigation maritime de précision comprenant
au moins deux balises, à savoir une balise dite de position et une balise dite de cap, lesdites balises étant agencées pour être placées à distance l'une de l'autre sur la passerelle d'un navire, chaque balise comprenant des moyens d'acquisition et de traitement d'un signal satellite de géolocalisation de la balise et des premiers moyens de communication par ondes électromagnétiques avec l'autre balise et/ou avec un calculateur portable
et ledit calculateur portable muni de moyens d'affichage de données,
caractérisé en ce que
chacune des balises de position et de cap comporte un boîtier comprenant un socle de fixation magnétique sur la passerelle dudit navire, au moins deux montants dont au moins un de préhension manuelle de ladite balise par un utilisateur et un chapeau contenant lesdits moyens d'acquisition et de traitement du signal satellite relié audit socle par lesdits montants,
en ce que lesdits premiers moyens de communication aérienne de chaque balise avec l'autre balise et/ou le calculateur comprennent une première antenne électromagnétique placée dans un desdits montants de ladite balise correspondante,
en ce que la balise de position comporte
des deuxièmes moyens de communication aérienne par ondes électromagnétiques, de données de correction de position provenant d'émetteur(s) terrestre(s) entièrement situé(s) à distance, lesdits deuxièmes moyens comprenant une deuxième antenne électromagnétique placée dans l'un des dits montants de ladite balise de position,
des troisièmes moyens de communication par ondes électromagnétiques de données externes, comprenant une troisième antenne également placée dans l'un desdits montants de ladite balise de position, et
des moyens de calcul situés dans le socle de ladite balise de position agencés pour calculer selon une première période déterminée à partir du signal satellite de géolocalisation de la balise de position, et des données de correction de position, un signal dit de position corrigée, donnant les coordonnées terrestres de ladite balise de position avec une précision de positionnement géographique inférieure à 1 cm,
les premiers moyens de communication de la balise de position étant agencés pour transmettre le signal de position corrigée au calculateur portable,
en ce que la balise de cap comporte
des deuxièmes moyens de communication agencés pour réceptionner les données corrigées en provenance de la balise de position,
des troisièmes moyens de communication par ondes électromagnétiques de données externes comprenant une troisième antenne également placée dans l'un desdits montants de ladite balise de cap,
des moyens de calcul situés dans le socle de la balise de cap agencés pour calculer selon une seconde période déterminée à partir du signal satellite de géolocalisation de la balise de cap et d'un signal correspondant aux données corrigées en provenance de la balise de position, un signal dit de cap calculé, donnant le cap avec une précision inférieure à 0.1°, les premiers moyens de communication de la balise de cap étant agencés pour transmettre ledit signal de cap calculé au calculateur portable,
et en ce que le calculateur portable comporte des moyens d'acquisition et/ou de stockage de données concernant les spécificités dimensionnelles et de chargement du navire et de données sur son environnement, et des moyens de calcul algorithmique des données de navigation du navire comprenant son cap et sa position par rapport audit environnement, lesdits moyens de calcul algorithmiques étant agencés pour, à partir de ces données concernant les spécificités du navire, du signal de position corrigé toute les premières périodes déterminées et du signal de cap calculé toute les secondes périodes de temps déterminées, calculer et afficher sur les moyens d'affichage, lesdites données de navigation.

Avantageusement le système comprend une balise de position qui comporte une centrale inertielle comprenant des moyens de mesure accélérométrique et/ou gyroscopique du mouvement du navire propres à caractériser des données dites d'attitude du navire et les premiers moyens de transmission de ladite balise de position sont agencés pour transmettre lesdites données d'attitude au calculateur portable agencé pour calculer le squat à prendre en compte pour le navire à partir desdites données d'attitude.

Dans un mode de réalisation avantageux le boîtier de chaque balise comporte au moins trois montants, à savoir un premier montant comprenant la première antenne, un deuxième montant comprenant la deuxième antenne et un troisième montant comprenant la troisième antenne.

Avantageusement chaque boîtier de balise s'inscrit dans un cylindre s'étendant autour d'un axe, ledit cylindre délimitant le socle, le chapeau et l'extérieur des montants, lesdits montants formant respectivement des piliers s'étendant axialement en étant répartis angulairement autour de l'axe et formant entre eux latéralement, sur toute leur hauteur et en leur centre, une ou plusieurs parties ajourées permettant la préhension manuelle par l'utilisateur.

L'invention propose aussi un procédé d'aide à la navigation maritime de précision dans lequel on place deux balises à distance l'une de l'autre sur la passerelle d'un navire, chaque balise comprenant des moyens d'acquisition et de traitement d'un signal satellite de géolocalisation de la balise et des premiers moyens de communication par ondes électromagnétiques avec une autre balise et/ou avec un calculateur portable muni de moyens d'affichage de données, caractérisée,

les premiers moyens de communication étant aériens, on fixe sur la passerelle de façon amovible par aimantation lesdites balises, comprenant une première balise dite de position et une seconde balise dite de cap, chaque balise étant de forme cylindrique ajourée comportant un socle et un chapeau et étant munie de montants intermédiaires de préhension manuelle par un utilisateur,

on acquière pour chacune desdites balises sa position par satellite par le biais d'une antenne de géolocalisation située dans le chapeau de ladite balise,

on acquière des données de correction de position dans la balise de position par le biais d'une deuxième antenne électromagnétique placée dans l'un des dits montants de ladite balise de position,

on acquière des données externes par le biais d'une troisième antenne également placée dans l'un desdits montants de ladite balise de position, et

on calcule selon une première période déterminée à partir du signal satellite de géolocalisation de la balise de position et des données de correction de position, un signal dit de position corrigée, donnant les coordonnées terrestres de ladite balise de position avec une précision de positionnement géographique inférieure à 1 cm,

on transmet le signal de position corrigée à la balise de cap et au calculateur portable, via une première antenne située dans un des montants,

on réceptionne les données corrigées en provenance de la balise de position par le biais d'une deuxième antenne située dans un des montants de ladite balise de cap,

on acquiert des données externes via une troisième antenne également placée dans l'un desdits montants de ladite balise de cap,

on calcule selon une seconde période déterminée à partir du signal satellite de géolocalisation de la balise de cap et d'un signal correspondant aux données corrigées en provenance de la balise de position, un signal dit de cap calculé, donnant le cap avec une précision inférieure à 0.1°,

on transmet le dit signal de cap calculé au calculateur portable,

et, le calculateur portable comportant des moyens d'acquisition et/ou de stockage de données concernant les spécificités dimensionnelles et de chargement du navire et de données sur son environnement, et des moyens de calcul algorithmique des données de navigation du navire comprenant son cap et sa position par rapport audit environnement, on calcule à partir de ces données concernant les spécificités du navire, du signal de position corrigé toutes les premières périodes déterminées et du signal de cap calculé toute les secondes périodes de temps déterminées, lesdites données de navigation que l'on affiche.

Avantageusement la balise de position comportant une centrale inertielle comprenant des moyens de mesure accélérométrique et/ou gyroscopique du mouvement du navire propres à caractériser des données dites d'attitude du navire, on transmet lesdites données d'attitude au calculateur portable pour corriger les données de navigation c'est à dire de position et de cap du navire.

Avantageusement on calcule le squat à prendre en compte pour le navire à partir desdites données d'attitude.

Egalement avantageusement les données d'attitude du navire comprennent au moins l'une des données prises parmi le tangage, le roulis, l'assiette, le gîte, la vitesse, la dérive, la vitesse de dérive.

La présente invention sera mieux comprise à la lecture de la description qui suit, de modes de réalisation donnés ci-après à titre d'exemples non limitatifs.

La description se réfère aux dessins qui l'accompagnent dans lesquels :

La figure 1 est une vue schématique en perspective du croisement de deux navires dont un est muni du système selon un mode de réalisation de l'invention.

La figure 1A est une autre vue de la passerelle du navire de la figure 1 munie du système de navigation disposé différemment.

La figure 2 est une vue de dessus schématique des navires de la figure 1 faisant apparaitre plus particulièrement une vue de détail, le système selon le mode de réalisation de l'invention plus particulièrement décrit ici.

La figure 3 montre schématiquement mais de façon plus détaillée les balises et le calculateur de la figure 2.

Les figures 4A et 4B montrent en vue externe et en perspective des exemples de balise de cap et de balise de position selon un mode de réalisation de l'invention.

La figure 5A illustre en vue de dessus la position dans le temps d'un navire muni d'un système selon un mode de réalisation de l'invention et la figure 5B la modélisation en 3D dans l'espace, d'une balise dudit système, entre trois instants donnés.

La figure 6 montre un exemple d'affichage dynamique de l'information délivrée au pilote par un système selon un mode de réalisation de l'invention.

La figure 7 est un graphique montrant la superposition de deux courbes représentant respectivement le moment induit par le vent sur le navire et le moment de redressement statique du navire en fonction de l'angle d'inclinaison du navire, permettant l'amélioration de la pertinence des données de navigation à partir de données d'attitude.

La figure 8A est une représentation schématique en coupe de face d'un navire dans un chenal faisant notamment apparaitre des données externes utilisables avec le système et/ou le procédé selon l'invention.

La figure 8b est un graphique montrant la superposition de deux courbes représentant le squat subi par le navire de la figure 8A respectivement dans les conditions de la figure 8A et en mer ouverte, qui vont pouvoir être utilisés dans les calculs permettant d'améliorer les données de navigation.

La figure 9 montre l'extrait d'un exemple de feuille de calcul d'un carnet de stabilité et d'assiette d'un navire, utilisable pour paramétrer le calculateur et/ou les boîtiers qui vont être utilisés selon un mode de réalisation de l'invention.

La figure 10A représente schématiquement en vue de dessus deux navires se croisant dans un chenal.

Les figures 10B et 10C montrent schématiquement en coupe de face, les navires de la figure 10A respectivement à vitesse de croisement nulle et à vitesse non nulle.

La figure 10D est un graphique montrant la superposition de deux courbes représentant en fonction de la vitesse, le squat subi par les navires des figures 10A à 10C et le pourcentage d'augmentation dudit squat entre la première courbe dans les conditions des 10A à 10C et la seconde courbe dans le cas où un seul navire est dans le chenal.

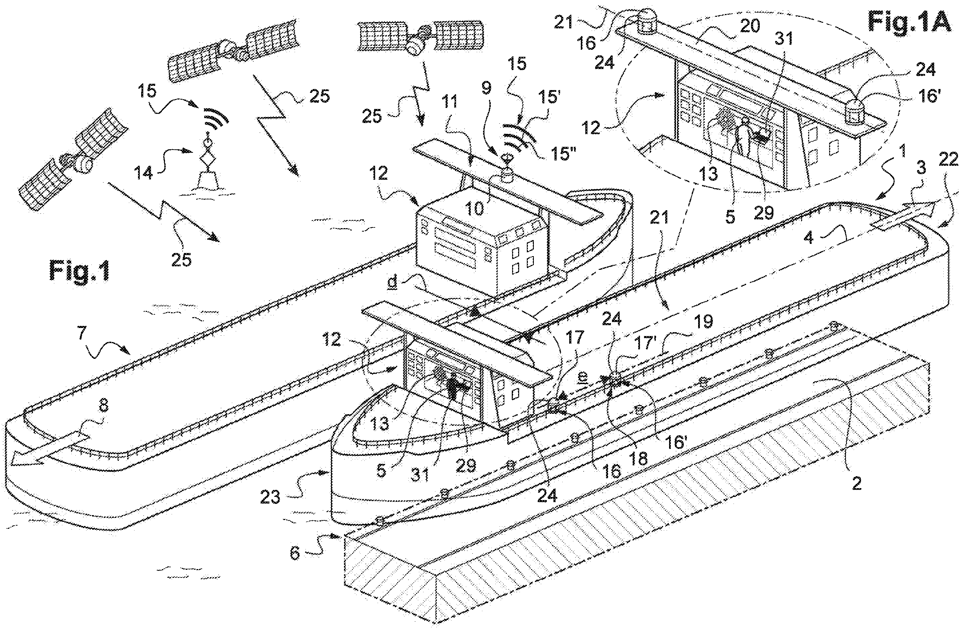

La figure 1 montre une situation de croisement de deux navires dans laquelle l'invention est particulièrement avantageuse.

Un premier navire 1 est en position finale d'approche d'un quai 2 auquel il désire s'amarrer.

Pour ce faire il se place parallèlement audit quai 2 en contrôlant en permanence au moins sa position, sa vitesse et son cap (flèche 3).

Plus précisément, le navire s'étendant longitudinalement selon un axe 4, le pilote 5 place le navire 1 dans une configuration où ledit axe 4 est sensiblement parallèle au rebord 6 extérieur du quai 2.

Un second navire 7 croise le premier navire 1 en sens inverse à une distance d réduite, par exemple inférieure à 1 m, par exemple 50 cm.

Le second navire 7 est équipé d'un dispositif émetteur/récepteur de position 9 correspondant à ce qui est communément utilisé dans l'art antérieur.

Il comprend notamment une antenne 10 sur le toit 11 de la passerelle 12 dudit navire 7.

Par passerelle 12, on entend plus particulièrement ici le poste de commandement et/ou de pilotage d'un navire, c'est à dire le lieu où se trouvent les commandes du navire dont la commande de vitesse et la barre 13 de direction.

Cette antenne 10 récupère des informations de distance du navire 7 par rapport à des points de références dans son environnement telles que par exemple des balises 14 marine qui émettent en permanence un signal 15.

La réception de plusieurs signaux 15, 15', 15", par exemple trois, permet une triangulation pour en déduire la position du navire 7 de manière connue en soi de l'homme du métier.

Le premier navire 1 est quant à lui muni d'un système mettant notamment en œuvre deux balises 16, 16' selon le mode de réalisation de l'invention plus particulièrement décrit ici.

Les balises 16, 16' sont portables, non reliées de façon filaire entre elles, et d'une masse comprise entre 3 kg et 0,5 kg, par exemple comprise entre 2 kg et 1 kg, par exemple 1 kg.

Elles ont été préalablement transportées sur la passerelle du navire 1 et posées sur le bastingage métallique de ce dernier, en étant alors fixées ainsi de manière amovible par aimantation. Pour ce faire, elles comportent un boîtier 17, 17' comprenant un socle de fixation, munie d'une semelle 18 magnétique.

En d'autres termes, elles sont montées sur la passerelle 12 du navire 1 et à l'extérieur de celle-ci.

Ces deux balises 16, 16' sont appelées respectivement balise 16 de position et balise 16' de cap.

Dans la suite, les deux balises 16, 16' étant de constitution sensiblement identique, lorsqu'aucune référence explicite à l'une et/ou à l'autre des balises ne sera effectuée, il faudra considérer que la remarque et/ou caractéristique mentionnée est indifféremment valable pour les deux balises conjointement.

Dans la suite de la description les mêmes numéros de références désigneront des éléments similaires ou identiques.

Sur la figure 1 les balises 16, 16' sont positionnées suivant un axe 19 sensiblement parallèle à l'axe 4 du navire 1.

Mais sur la vue agrandie de la figure 1A, elles sont disposées cette fois-ci perpendiculairement à l'axe, de chaque côté de l'aileron représenté schématiquement.

Sur l'exemple de la figure 1, les balises 16, 16' sont par exemple espacées d'une distance e déterminée, comprise entre 0.5 m et la longueur du navire 1, par exemple comprise entre 1 m et 100 m, par exemple comprise entre 1.5 m et 50 m par exemple entre 2 m et 5 m.

Ce mode de réalisation favorise notamment la détermination du cap avec une grande précision.

Par contre, dans le mode de réalisation de la figure 1A, où les balises 16, 16' sont fixées sur l'aileron 20 de la passerelle 12 du bateau, elles sont positionnées suivant un axe 21 sensiblement orthogonal à l'axe 4 du navire et de chaque côté (bâbord et tribord) du navire, soit par exemple à une distance de 15m.

Ce mode de réalisation favorise notamment la détermination du roulis avec une grande précision.

Par aileron 20 on entend un pont faisant partie de la passerelle 12, orthogonal à l'axe 4 du navire 1 et dont les extrémités sont en porte à faux de chaque côté du navire pour permettre une bonne visibilité de l'ensemble de celui-ci lors des manœuvres.

Ici l'utilisateur/pilote 5 va ainsi pouvoir utiliser des marquages préexistant, dont la position par rapport au navire 1 (par exemple l'altitude par rapport au pont 21 supérieur et/ou la distance par rapport à la proue 22 et/ou à la poupe 23) est connue avec une grande précision.

Selon l'invention les balises 16, 16' comprennent des moyens 24 d'acquisition et de traitement de signaux satellites 25 de géolocalisation desdites balises.

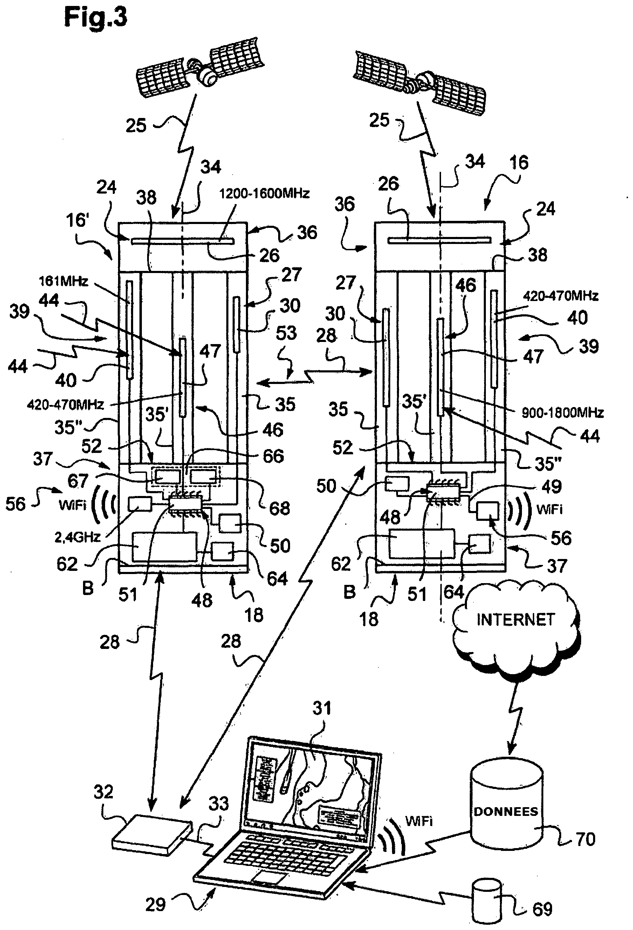

En référence également à la figure 3 les moyens 24 d'acquisition comprennent une antenne 26 adaptée pour la réception d'au moins un signal satellitaire, en particulier des signaux de systèmes de positionnement par satellite tels que les systèmes GPS (acronyme anglaise de Global Positionning System) ou les systèmes correspondant connus de l'homme du métier sous les dénominations GLONASS, Galileo, Beidou-2, QZSS, IRNSS.

Les moyens 24 d'acquisition acquièrent les fréquences des signaux 25 dans au moins l'une et/ou l'autre des bandes de fréquences dites L1, L2, L3 ou L5 connues de l'homme du métier. Par exemple la balise acquière dans les fréquences L1 (1 575,42 MHz) et L2 (1 227, 60 MHz).

Ces moyens 24 d'acquisition permettent un premier positionnement des balises et donc du navire par exemple avec une précision de l'ordre de quelques mètres par exemple 5m.

Chaque balise 16, 16' comprend des premiers moyens 27 (voir figure 3) aériens de communication par ondes 28 électromagnétiques avec l'autre balise 16, 16' et/ou avec un calculateur 29.

Les premiers moyens 27 de communication aérienne comprennent une première antenne 30 électromagnétique d'émission/réception à ultra-haute-fréquence connue en elle-même.

Le calculateur 29 est portable et installé notamment à bord de la passerelle 12 par le pilote 5 lors de son embarquement.

Le calculateur 29 est muni de moyens 31 d'affichage de données. Les moyens 31 d'affichage sont par exemple un écran couleur tactile.

Le calculateur 29 est durci et est par exemple un ordinateur portable étanche, un téléphone mobile ou une tablette par exemple du type de celles commercialisées par la société Panasonic sous la dénomination FZ-G1.

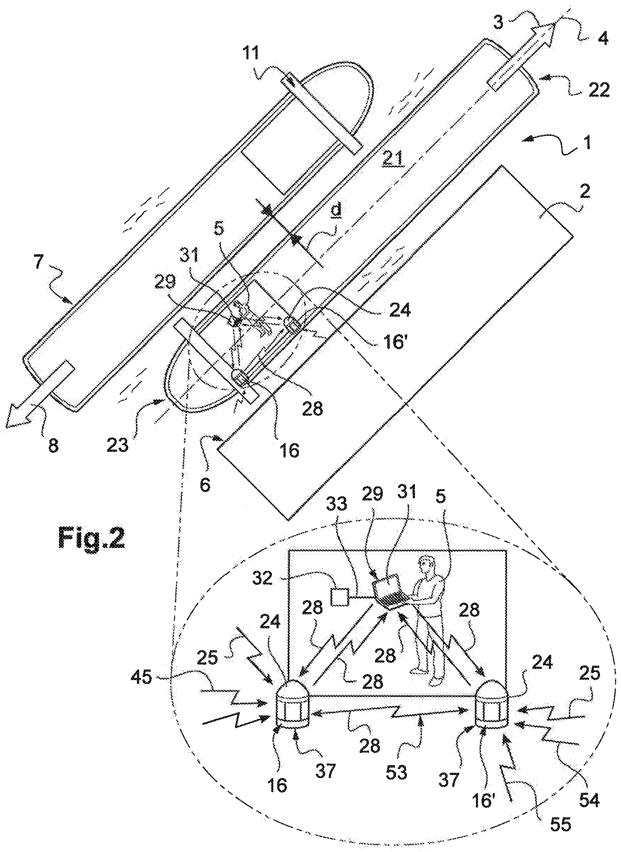

Sur la figure 2, le calculateur 29 comprend des moyens 32 de communication avec lesdites balises. Ces moyens 32 sont dans le mode de réalisation plus particulièrement décrit ici un dispositif de communication radio connecté au calculateur 29 par exemple par câble 33 et selon la norme USB.

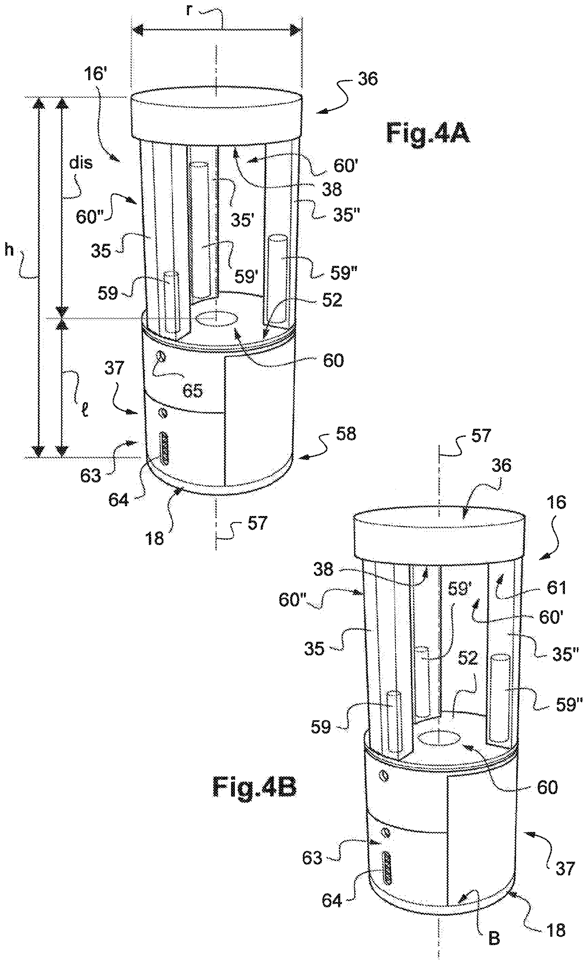

Les balises 16 de position et 16' de cap vont maintenant être décrites plus précisément en référence aux figures 3, 4A et 4B.

La figure 3 montre une balise 16 de position et une balise 16' de cap.

Les balises s'étendent globalement selon un axe 34 générateur et comprennent au moins deux montants 35, 35',35''' de préhension manuelle de la balise par un utilisateur.

Les montants 35, 35',35''' sont parallèles à l'axe générateur, identiques et formés par des colonnes cylindriques ou de section transversale ovale ou sensiblement ovale, ou trapézoïdale, aux coins arrondis ou adoucis, de diamètre par exemple inférieur à 5 à 10 cm pour permettre une bonne préhension manuelle de la balise par le pilote.

Bien qu'il puisse y avoir un seul montant 35 permettant la préhension dans le mode de réalisation plus particulièrement décrit ici, les montants sont au nombre de trois et chacun permettant une préhension manuelle aisée de façon indifférenciée.

Les montant 35, 35',35''' sont coiffés à une extrémité par un chapeau 36, et connectés à un socle 37 à l'autre extrémité des balises 16,16'. Le chapeau 36 contient un plancher 38 de support sur lequel sont fixés lesdits moyens 26 d'acquisition et de traitement du signal satellite reliés au socle 37 par les montants.

Dans un mode de réalisation seul le moyen 26 d'acquisition est dans le chapeau 36, les moyens de traitements étant déportés par exemple dans le socle 37.

Les balises 16,16' comportent des deuxièmes moyens 39 de communication aérienne par ondes électromagnétiques.

Les deuxièmes moyens 39 de communication comprennent une antenne 40 de réception à très-haute-fréquence (VHF) 41 ou à ultra-haute-fréquence (UHF) 42 et/ou une antenne d'émission/réception GSM 43.

L'antenne de réception ultra-haute-fréquence est sensible par exemple à la plage de fréquences comprises entre par exemple 380 Mhz et 550Mhz, par exemple comprise entre 420 Mhz et 470Mhz.

L'antenne de réception à très-haute-fréquence est sensible par exemple à la plage de fréquences comprises entre par exemple 140 Mhz et 200Mhz, par exemple comprise entre 150 Mhz et 170Mhz par exemple 161Mhz.

Par antenne GSM on entend une antenne capable de recevoir, acquérir et traiter des signaux correspondant à la norme GSM (acronyme anglais de Global System for Mobile Communications).

Les signaux GSM reçus sont par exemple dans la gamme de fréquences 900Mhz à 1900Mhz, par exemple 1800Mhz.

Les deuxièmes moyens 39 de communication comprennent une deuxième antenne 40 électromagnétique placée dans l'un des dits montants 35, 35',35".

Les balises 16,16' reçoivent par ces deuxièmes moyens 39 des données/informations 44 provenant de sources externes au navire 1 et aux balises 16,16' et au calculateur 29.

Ces informations 44 externes émanent par exemple d'autorités tierces.

La balise 16' de cap reçoit par exemple via ces deuxièmes moyens 39 de communication des informations sur le trafic maritime notamment des signaux AIS (acronyme anglais de Automatic Identification System ou Système d'identification automatique) qui est un système d'échanges automatisés de messages entre navires par radio à très haute fréquence et qui permet aux navires et aux systèmes de surveillance de trafic de connaître l'identité, le statut, la position et la route des navires se situant dans la zone de navigation.

La balise 16 de position reçoit par ces deuxièmes moyens 39 de communication des données de correction de position provenant d'émetteur(s) terrestre(s) entièrement situé(s) à distance.

De manière connu en soi, ces émetteurs fixes émettent des informations telles que celles utilisées dans le procédé de correction des données GPS pour les GPS différentiels connus de l'homme du métier sous la dénomination Cinématique temps réel (ou RTK acronyme anglais de Real Time Kinematic).

Les deuxièmes moyens 39 de communications de la balise 16 position reçoivent donc par exemple des informations de correction de la position acquise par un système de positionnement par satellite tel que par exemple le GPS.

Ces informations de correction sont soit acquises directement par la balise de cap, soit transférées à celle-ci par la balise de positon via les premiers moyens de communication.

Les balises comportent des troisièmes moyens 46 de communication aérienne par ondes électromagnétiques également de données externes.

Ces troisièmes moyens 46 de communication comprennent une troisième antenne 47 également placée dans l'un desdits montants 35,35',35".

Ils comprennent également comme les deuxièmes moyens 39 de communication, une antenne d'émission/réception ou réception ultra-haute-fréquence et/ou une antenne d'émission/réception GSM.

Les données externes reçues par les troisièmes moyens 46 de communication sont notamment et par exemple :

- Pour la balise 16 de position, une redondance du signal de correction reçue par un autre mode de communication (par GSM si les deuxièmes moyens sont des antennes UHF et réciproquement).

De cette manière, la balise de position assure une sécurisation de la réception des données de correction ;

- Pour la balise 16' de cap, des données dites VTS (acronyme anglais pour vessel traffic service) et correspondant à des données d'un système similaire à une tour de contrôle de port maritime et connues en soi de l'homme du métier.

La réception de donnée VTS sur le trafic maritime à l'approche d'un port est effectuée à une ultra-haute-fréquence.

Dans un mode de réalisation, les troisièmes moyens 46 de communication comprennent une antenne de réception très haute fréquence, les données externes étant des signaux VTS et/ou AIS.

Les balises comportent des moyens 48 de calcul situés dans le socle de ladite balise.

Ces moyens de calcul sont connectés avec les divers éléments électroniques de la balise via un bus 49 de données dont les moyens de communications 26,27,40,46 et/ou leur moyens de traitement associés 50.

Les moyens de calcul sont par exemple un microprocesseur 51 intégré dans une carte-mère spécifique.

La carte mère comprend par exemple un noyau de calcul constitué d'une carte linux embarquée (non représentée).

Les différents moyens électroniques comprennent une carte électronique connectée à ladite carte mère et disposée de manière empilée et contenue dans le socle 37.

La carte mère constitue la base B dudit socle 37 et le couvercle en constitue le toit 52.

Les antennes 30, 40, 47 traversent le toit du socle 37 et sont en saillie de celui-ci à l'intérieur des montants correspondant 35, 35" et 35'.

Les cartes électroniques correspondantes sont quant à elles confinées à l'intérieur du socle 37 muni de joint pour assurer une bonne étanchéité à l'humidité, aux poussières et aux perturbations électromagnétiques (générées par elles ou induites).

Les moyens 48 de calcul sont agencés pour calculer selon une première période déterminé à partir du signal satellite de géolocalisation de la balise, et des données de correction de position, un signal dit de position corrigée.

Le signal corrigé est transmis (flèche 28) par les premiers moyens de communication à la balise 16' de cap.

La première période est par exemple le temps séparant deux acquisitions par les moyens 24 d'acquisition satellite, par exemple inférieure à la seconde, par exemple inférieur à 0.5s.

Les moyens 48 de calcul de la balise 16 dite de position sont ainsi agencés pour donner le signal de position corrigée.

Les données de correction 54, 55 par exemple RTK permettent d'obtenir les coordonnées terrestres de ladite balise avec une précision de positionnement géographique inférieure à 1 cm. Pour ce faire, les moyens et algorithmes habituels utilisant la combinaison et/ou la triangulation des données GPS des différents éléments de référence utilisés sont mis en œuvre de façon à être à la portée de l'homme du métier.

Les moyens 48 de calcul de la balise de cap sont quant à eux agencés pour calculer selon une seconde période déterminée, par exemple égale à la première période déterminée, à partir du signal satellite de géolocalisation de la balise et du signal corrigé émis par la balise de position et générant un signal dit de cap calculé, donnant le cap avec une précision inférieure à 0.1°.

Cette précision ici encore est obtenue en mettant en œuvre les algorithmes de calcul et/ou un formatage des données connues ou format binaire.

Par exemple dans un mode de réalisation on détermine le cap et/ou le cap vrai par différence des phases des signaux satellitaires reçus par les balises de cap et de position.

Dans un autre mode de réalisation, les positions de chaque balise étant déterminées, on calcule le cap à partir du vecteur formé par les coordonnées desdites positions.

Dans le mode de réalisation où les balises ne sont pas installées longitudinalement, tel que par exemple sur la figure 1A, on recalcule l'axe du cap en fonction du décalage angulaire de l'installation des balises par rapport à l'axe longitudinal du navire.

A titre d'exemple, le recalage est de sensiblement 0° sur pour une installation des balises telle que celle de la figure 1 (alignement longitudinal des balises) tandis qu'il est de sensiblement 90° pour une installation des balises telle que celle de la figure 1A (alignement transversal des balises)

Chaque balise transmet les informations calculées par elle au calculateur 29 par les premiers moyens de communication.

Plus précisément les premiers moyens 30 de communication sont agencés pour transmettre le signal obtenu de position corrigée ou de cap au calculateur portable pour calcul et affichage par ses moyens d'affichage.

Les balises 16, 16' comprennent des quatrièmes moyens 56 de communication aérienne électromagnétique. Ces moyens sont notamment agencés pour la mise à jour des paramètres de configuration des moyens de calcul et/ou des premiers, deuxièmes et/ou troisièmes moyens de communication par voie électromagnétique.

Ils comprennent une antenne et sont par exemple conforme à la norme Wifi.

Dans un autre mode de réalisation ces moyens et son antenne sont agencés pour l'utilisation dans le cadre du protocole connu de l'homme du métier sous la dénomination ZigBee.

L'antenne permet d'émettre et de recevoir dans la bande de fréquence à 2.4Ghz et pour une vitesse de transmission d'information sensiblement de 250 Kbit/s.

Dans ce mode de réalisation, les deux balises 16, 16' et le calculateur 29 font partis d'un réseau ZigBee.

Les figures 4A et 4B montrent les balises de position et de cap de la figure 3.

Dans ce mode de réalisation les balises 16, 16' sont extérieurement identiques.

Les balises comprennent un boîtier extérieur. Dans un mode de réalisation le boîtier n'est pas d'une seule pièce mais chapeau 36, montants 35,35',35" et socle 37 sont constitués chacun d'une pièce séparée.

Le boîtier est métallique et correspond aux normes internationales d'étanchéité IP67 ou IP68.

Le boîtier de la balise s'inscrit dans un cylindre s'étendant autour d'un axe 57.

Les balises sont donc de forme cylindrique ou sensiblement cylindrique, d'une hauteur h comprise entre 20 cm et 50 cm, par exemple 30 cm, et d'un diamètre r compris entre 9 cm et 25 cm par exemple compris entre 10 cm et 15 cm, par exemple 12 cm.

Elles comprennent à une extrémité le socle 37 comprenant une base 58, et à l'autre extrémité le chapeau tous deux sensiblement cylindriques et placés coaxialement, le cylindre délimitant le socle, le chapeau et l'extérieur des montants.

Les montants forment respectivement des piliers, de section par exemple en disque ou sensiblement ovoïdes ou à facettes tels que hexagonales ou rectangulaires.

La base et le chapeau sont séparés par au moins un montant et agencé pour permettre la préhension manuelle de la balise par un utilisateur, par exemple en permettant par son diamètre hors tout de tenir dans la paume et les doigts de l'utilisateur.

Dans un mode de réalisation au moins deux antennes 59,59',59" sont placées dans un même montant et/ou le boîtier 17, 17' comprend au plus autant de montants que d'antennes.

Dans un autre mode de réalisation, les premiers 27, deuxièmes 39 et troisièmes 46 moyens de communication aérienne comprennent chacun des antennes (respectivement 30, 40, et 47) électromagnétiques placées dans un desdits montants.

Plus précisément la balise comporte au moins trois montants, à savoir un premier montant 35 comprenant la première antenne 30, un deuxième montant 35' comprenant la deuxième antenne 40 et un troisième montant 35" comprenant la troisième antenne 47.

Ils s'étendent axialement, sensiblement parallèlement les uns des autres et sont sensiblement répartis angulairement autour de l'axe.

La répartition est avantageusement une équipartition. A titre d'exemple, pour une balise comportant trois montants, ceux-ci sont disposés tous les 120°, éventuellement à plus ou moins 10°.

Entre leurs surfaces latérales les montants 35, 35', 35" forment, sur toute leur hauteur et en leur centre, une ou plusieurs parties ajourées 60, 60', 60" permettant la préhension manuelle par l'utilisateur 5.

Les montants peuvent être recouverts, notamment sur la périphérie 61 intérieure desdits ajours, d'un surmoulage en plastique ou en matière caoutchouteuses pour la facilitation de la préhension.

Le chapeau contient les moyens d'acquisition et de traitements du signal satellite relié au socle par lesdits montants et fixé au plancher 38 support du chapeau.

Ledit plancher 38 support, est par exemple parallèle à la base et au couvercle du socle 37 eux-mêmes parallèles entre eux.

Le socle 37 est d'une hauteur l par exemple comprise entre 3 cm et 20 cm par exemple entre 5 cm et 10 cm par exemple 6 cm.

Le support 38 est à une distance dis du toit du socle 37 comprise entre 10 cm et 40 cm, par exemple comprise entre 15 cm et 20 cm, par exemple 16 cm.

Le socle des balises comprend des moyens d'alimentation par batterie 62.

La batterie est montée dans un boîtier 63 externe, lui-même monté dans le socle et démontable par exemple par encliquetage.

La batterie 62 est une batterie à nickel-hydrure métallique NiMH.

Dans un mode de réalisation, une prise 64 d'entrée d'alimentation en énergie électrique extérieur est prévue sur la face extérieure du boîtier de la batterie, par exemple pour le rechargement, y compris à chaud de ladite batterie.

Dans un mode de réalisation le socle 37 comprend des moyens de connexion USB 65 connectés au bus de données et permettant une interaction directe avec le microprocesseur de la balise et/ou l'une de ses mémoires (non représentées).

Dans un mode de réalisation l'une au moins des balises comporte au moins un capteur 66 (figure 3) de mesure accélérométrique 67 et/ou gyroscopique 68.

Dans le mode de réalisation plus particulièrement décrit ici, la balise de position comporte une centrale inertielle comprenant des moyens de mesure accélérométrique et/ou gyroscopique du mouvement du navire.

Plus précisément, la centrale comprend au moins deux accéléromètres, par exemple trois et au moins deux gyroscopes, par exemple trois, chacun agencé pour effectuer sa mesure selon une des trois directions d'un repère orthogonal de l'espace.

Les accéléromètres et/ou gyroscopes sont de types connus.

Les données acquises sur l'accélération et/ou la position angulaire déduite de la centrale inertielle sont transmises au microprocesseur de la balise et propres à caractériser des données dites d'attitude du navire.

Le calculateur comprend des moyens de connexion à une première base 69 (figure 3) de données par exemple de données du constructeur du navire sur celui-ci.

Cette base, contient par exemple les données de longueur, largeur, profondeur de quille, coefficient de block, du navire.

Le calculateur comprend des moyens de connexion à une deuxième base 70 (figure 3) de données par exemple de données contextuelle sur l'emplacement du navire telles que des données météorologiques sur les prédictions des vents, leur direction et leur intensité, des données cartographiées sur les marées, des données topologiques sur les fonds marins comprenant des informations par exemple de rugosité du fond, d'envasement, de profondeur d'eau, de courant.

Les premières 69 et deuxièmes 70 bases de données sont accessibles par exemple par communication WIFI et/ou par un accès internet mobile.

Cet accès peut être effectué depuis le calculateur ou l'une desdites balises.

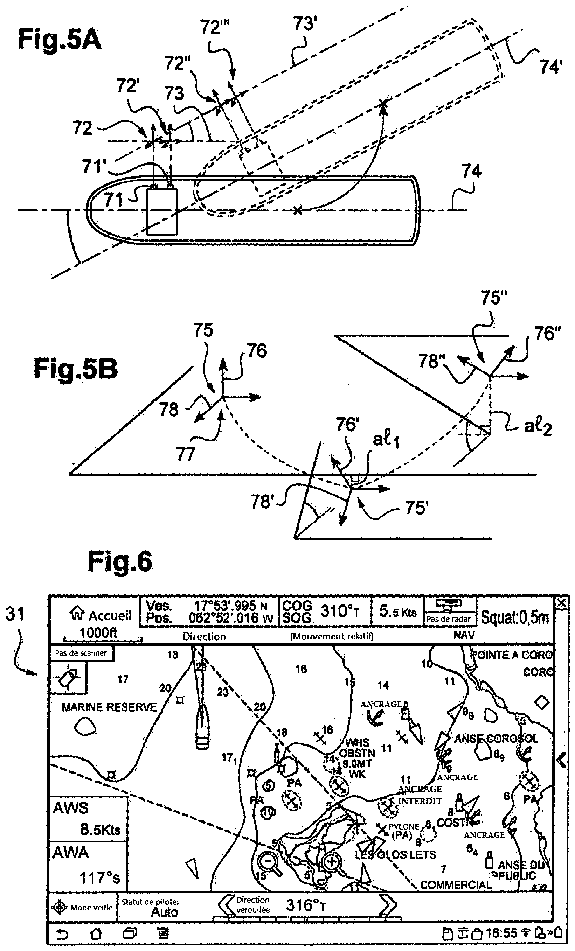

L'attitude du navire sera précisée en référence aux figures 5A et 5B.

L'attitude comprend au moins l'une des données prises parmi le tangage, le roulis, l'assiette, le gîte, la vitesse, la dérive, et la vitesse de dérive, données qui vont permettre d'optimiser les données de navigation proprement dites comprenant essentiellement la position et le cap du navire.

Sur la figure 5A, un navire comprend deux balises 71,71', l'une de position 71 et l'autre de cap 71', qui acquièrent chacune leur position, et dont la balise de cap acquière l'orientation à un instant donné.

Passé un temps déterminé, le navire a changé de cap et d'attitude.

A titre d'exemple, la position est directement déterminée par la balise de position 71. Les coordonnées 72,72' de la balise de position entre avant 72 et après 72' le temps déterminé permettent de calculer la vitesse. L'acquisition des coordonnées des balises de position et de cap, permet de déterminer l'orientation de la ligne 73 passant par les deux balises 71'71' et correspondant au cap 74 du navire.

Le positionnement par signaux satellitaires est un positionnement en trois dimensions qui permet selon la disposition longitudinale ou transversale des balises d'accéder directement aux grandeurs respectivement de tangage ou roulis.

Les données récupérées de la centrale inertielle permettent de substituer et/ou compléter les mesures de l'attitude du navire.

Sur la figure 5B sont représentés trois repères 75,75',75" orthonormés associés à une balise et à trois instants successifs du déplacement du navire.

A titre d'exemple, la mesure suivant l'axe 76 vertical Z permet de mesurer une altitude minimale 77 et une altitude maximale (al1+al2) permettant d'en déduire la houle et mis en correspondance avec des données externes sur le navire, d'en déduire par calcul le comportement du navire dans cette houle vis a vis du tangage.

La mesure suivant l'axe Z peut être effectuée par mesure accélérométrique ou par repérage de l'altitude de la balise en récupérant sa coordonnée en Z du système de positionnement satellitaire.

Ces données peuvent par exemple être affinées ou mesurées par une mesure angulaire d'un gyroscope.

De manière identique la mesure peut être effectuée sur un autre axe 78 du repère pour en déduire le roulis.

Ces moyens de mesure qu'ils soient par positionnement satellitaire ou par mesure d'une centrale inertielle permettent de mesurer une altitude et donc un enfoncement du navire.

Dans un mode de réalisation les moyens de calcul possèdent les informations pour en calculer l'enfoncement normal du navire en fonction des conditions de charges du navire et météorologique et donc en déterminer le squat par différence entre l'enfoncement mesuré et celui prévisible.

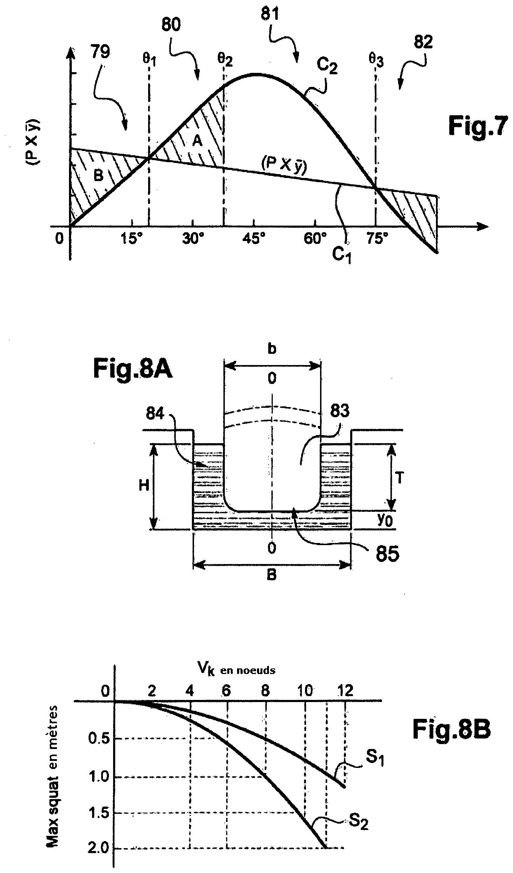

Les moyens de calcul peuvent également déduire le squat du navire comme il sera détaillé en référence à la figure 8. Les moyens 51 de calcul peuvent donc comparer le squat prévisionnel et le squat mesuré et signaler sur les moyens d'affichage une incohérence entre les deux résultats.

Les premiers moyens de transmission de ladite balise de position sont agencés pour transmettre lesdites données d'attitude au calculateur 29 portable agencé pour calculer le squat à prendre en compte pour le navire à partir desdites données d'attitude.

La figure 6 montre le résultat d'un affichage 31 sur les moyens d'affichage du calculateur 29.

Cet affichage indique plusieurs informations superposées à une cartographie et à des données externes de trafic maritime dans l'entourage du navire.

Les trames de communication reçues par le calculateur 29 au format binaire sont ici en particulier décodées par les logiciels connus, par exemple par un logiciel de PPU Monitor au format NMEA pour être compatible avec les différents logiciels de navigation et d'accostage tels que QASTOR SEAiq ou Orca.

On va maintenant décrire certains modèles de phénomènes physiques et fonctionnements d'un navire notamment pris en compte par le système selon l'invention en référence aux figures 7 à 10D.

La figure 7 montre une première courbe $C_1$ représentant le module du moment de force exercée par le vent sur un navire en fonction de l'angle de gîte dudit navire.

Par gîte, on entend l'angle transversal par rapport au plan vertical passant par l'axe du navire selon lequel le navire s'incline de manière volontaire ou involontaire pour les besoins de la navigation.

Les hypothèses de départ sont un vent soufflant avec une force P sensiblement orthogonalement à l'axe d'un navire.

Selon la formule :

$$P = 2.10-5*Am*(Vk)^2$$

Ou P est la force du vent en Newton ;
Am est la surface latérale sur laquelle agit le vent en $m^2$ ;
Vk est la vitesse du vent en nœud (ou miles marin soit 1 852 m/heure).

Le bras de levier est ici considéré comme étant la somme de deux distances, d'une par la distance entre l'altitude du point d'application de la force du vent par rapport à la ligne de flottaison du navire et d'autre part la moitié de l'altitude de la partie du navire immergée sous la ligne de flottaison.

Le moment de la force du vent suit la formule :

$$P * \breve{y} = W * GZ$$

Ou, $P * \breve{y}$ est le moment induit par le vent ;

W est déplacement d'eau du navire en tonne ;

GZ est le moment de redressement nécessaire pour remettre le navire dans sa position droite.

Cette courbe est sensiblement rectiligne et décroissante linéairement en fonction de l'angle.

La figure 7 montre également en superposions de la première courbe $C_1$ une seconde courbe $C_2$ montrant le moment de redressement statique du navire en fonction de l'angle d'inclinaison du navire (gîte).

Les moments représentés par la première et la seconde courbe sont de sens inverse.

Cette seconde courbe est sensiblement parabolique de concavité tournée vers le bas et définissant avec ses trois intersections avec la première courbe, trois domaines séparés.

Un premier domaine 79 pour les angles d'inclinaison de 0° à $\theta_1$ (environs 20°) dans lequel, la force du vent, supérieur au moment de redressement tend à incliner de plus en plus le navire jusqu'à $\theta_1$ condition d'équilibre des moments et donc position de stabilité du navire.

L'aire entre les deux courbes est B.

Un deuxième domaine pour les angles $\theta_1$ à $\theta_3$ (environs 75°). Dans ce domaine le moment de redressement du navire est supérieur au moment induit par le vent. Ce domaine comprend deux sous domaines.

Un premier sous domaine 80 de $\theta_1$ à $\theta_2$ (environs 40°) défini par le fait que l'aire A définie entre les deux courbes entre $\theta_1$ à $\theta_2$ est égale à B. Dans ce sous domaine le navire subit des embardées.

Un deuxième sous domaine 81 dans lequel le moment de redressement est suffisamment supérieur au moment du vent pour redresser le navire.

Un troisième domaine 82 au-delà de $\theta_3$ dans lequel le moment de redressement n'est pas assez fort pour ramener le navire qui chavire alors inéluctablement.

Le système selon l'invention en intégrant des paramètres d'une part structurels sur le navire et d'autre part météorologiques permet d'anticiper la stabilité du navire par rapport au gîte et d'en transmettre les informations au pilote qui peut alors corriger vitesse et trajectoire du navire.

Les figures 8A et 8B montrent l'évaluation du phénomène de squat selon un mode de réalisation de l'invention.

Dans ce mode de réalisation, le phénomène adopte une modélisation qui bien que négligeant certaines variables à prendre en compte permettent néanmoins d'obtenir une modélisation suffisamment précise pour être exploitée.

La figure 8A est une représentation schématique en coupe de face d'un navire 83 dans un chenal 84.

Le chenal est d'une profondeur H et d'une largeur B. Le navire 83 est d'une largeur b et d'une altitude immergée T, laissant une distance $y_0$ sous la coque 85telle que :

$$\mathrm{H} = \mathrm{T} + \mathrm{y}_0.$$

Le navire 83 présente un coefficient de bloc intrinsèque à son architecture de coque. Il est égal au rapport du volume de la partie immergée au volume du parallélépipède rectangle contenant entièrement la coque dudit navire.

Les grands navires de commerce, telles les superpétroliers, ont des coefficients de bloc très élevés, atteignant 0,90.

Le navire se déplace à une vitesse relative en nœuds par rapport à l'eau et/ou au courant d'eau de Vk.

Le CSA représente la surface en $m^2$ de la section transversale. C'est à dire que le $CSA_N$ est le CSA de la coque du navire et le $CSA_C$ est celui de la mer fermée tel que par exemple un chenal.

Ceci donne :

Pour une situation de navigation en mer fermée :

Le facteur de blocage S est égal au $CSA_N/CSA_C$.

Pour une situation de navigation en mer ouverte :

$$\mathrm{Le\ facteur\ de\ blocage\ S} = \frac{b*T}{\left(\left(\frac{7.04}{C_b^{0.85}}\right)\right)b*H}$$

soit alors :

$$\text{Squat Maximal} = \frac{C_b * S^{0.81} * V_k^2}{20} \; ;$$

en mer ouverte ou fermé.

La figure 8b représente un graphique montrant la superposition de deux courbes $S_1, S_2$ du squat maximal subi par un navire de type supertanker de plus de 250 000 tonnes, en fonction de sa vitesse en nœuds, l'une des courbes $S_1$ en mer ouverte et l'autre $S_2$ en mer fermée pour un rapport H/T sensiblement égale à 1.10.

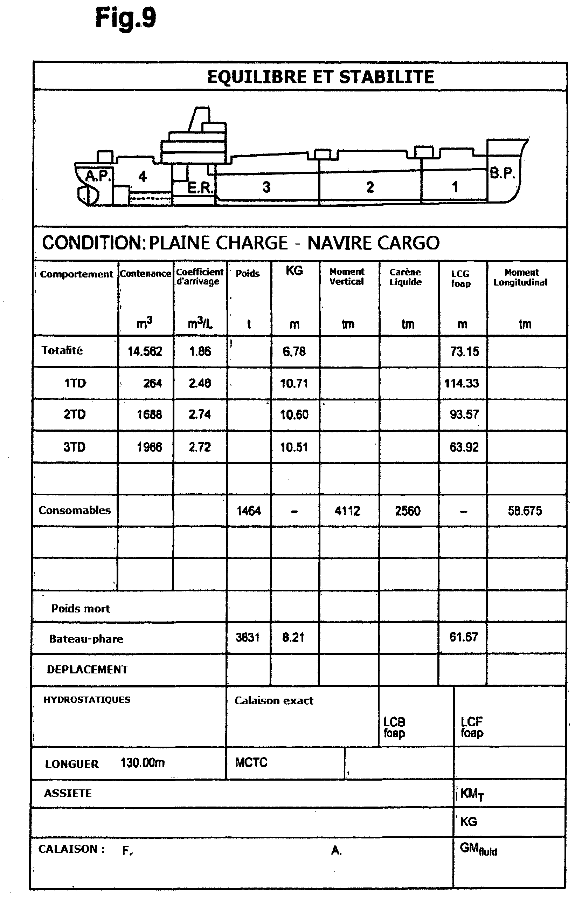

La figure 9 montre un extrait d'un exemple de feuille de calcul d'un carnet de stabilité et d'assiette.

Le constructeur donne un certain nombre d'informations constructeurs. Dans un certain nombre de navires, celles-ci sont disponibles par voie numérique dans un système centralisé d'informations du navire.

La figure 9 montre un exemple de feuille de calcul pour la stabilité et l'assiette d'un navire de type cargo en fonction de ses conditions d'utilisation.

Les calculs sont effectués par exemple grâce à de tables de particularités hydrostatiques de manière connu en soit de l'homme du métier.

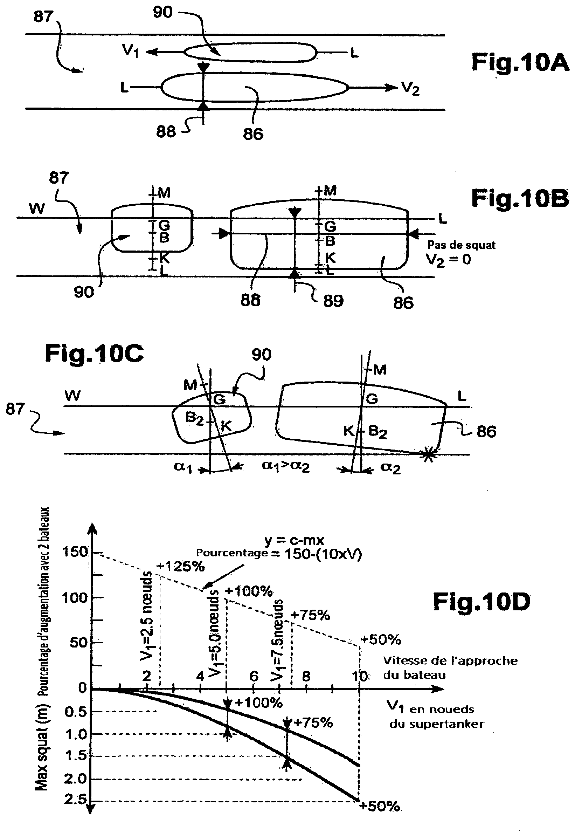

Les figures 10A à 10D montrent de manière schématique le calcul et la valeur du squat dans la situation de la figure 10A.

Un supertanker 86 se déplace dans un chenal 87 dans une direction. Il est d'une largeur 88 de 50 m et d'un tirage statique 89 de la quille uniforme de 12.75 m (ou l'altitude d'enfoncement statique de sa quille dans l'eau par rapport à la surface de l'eau, précédemment dénommée T) et d'un coefficient de bloc de 0.825. Le chenal est d'une section rectangulaire de profondeur de 16m et d'une largeur de 250 m.

A titre d'exemple, pour une vitesse de 5 nœuds, le squat maximal sera de 0.26 m lorsqu'il est seul dans le chenal.

Un second navire du type container 90, le croise en sens inverse dans ledit chenal. Il est d'une largeur de 32 m, et d'un tirage statique de la quille uniforme de 11.58 m et d'un coefficient de bloc de 0.580.

Lorsque les deux navires sont en vis à vis l'un de l'autre :

Si chacun est à vitesse nulle comme sur la vue en section de la figue 10B aucun phénomène de squat n'est subi par l'un ou l'autre des navires.

Si les deux se croisent chacun à une vitesse de 5 nœuds, alors, le squat maximal du supertanker passe de 0.26m à 0.38m d'après les formules développées en référence à la figure 8A. Ce squat du supertanker est maximal à la proue du fait du coefficient de bloc supérieur à 0.7, et celui du container à la poupe car son coefficient de bloc est inférieur à 0.7.

Un phénomène non seulement de succion verticale vers le lit du chenal apparaît mais également une composante transversale pour laquelle les deux navires sont attirés l'un vers l'autre ce qui génère une gîte supplémentaire pour chacun.

Chaque navire subit un squat le faisant pivoter autour de son centre de gravité.

La figure 10D illustre l'augmentation en pourcentage du squat en fonction de la vitesse selon la présence ou non d'un autre navire.

On va maintenant décrire le fonctionnement d'un système et de procédé selon l'invention en référence à la figure 1.

Un navire du type supertanker désire accoster à un quai d'un port. Le port est muni d'un dispositif AIS, VTS. Un pilote est amené à bord du navire par exemple en pilotine.

Le pilote décharge de la pilotine un système selon un mode de réalisation de l'invention comprenant deux balises non reliées physiquement entre elles, respectivement de cap et de positon et un calculateur tel qu'un téléphone du type Smartphone muni d'un moyen de communication par ondes aériennes avec les deux balises.

Le pilote attrape une balise dans chaque main par un pilier et monte à bord du navire à piloter.

Le pilote utilise alors les marquages spécifiques du navire et y installe la balise de position et la balise de cap à une distance supérieure à 2 m par exemple 20 m le long de l'axe du navire de sorte à obtenir une précision sur le cap de l'ordre de 0.01° au lieu de 0.1° pour 2 m.

L'installation par fixation amovible des balises est réalisée par la mise en place de la semelle magnétique de chaque balise contre la paroi métallique du navire à l'endroit considéré.

Le pilote met sous tension les balises et obtient par les quatrièmes moyens (par exemple de communication par WIFI) des données diverses communiquées par le commandant du navire et concernant notamment les paramètres spécifiques le concernant (sous forme par exemple d'une fiche, notamment en format numérique, comme celle de la figure 9) qu'il charge dans les balises et/ou le calculateur.

Le calculateur et les moyens d'affichage ayant été allumés, et une fenêtre apparaît alors sur lesdits moyens d'affichage du calculateur et indique des données telles que les pourcentages de charge des batteries de chaque balise, l'autonomie restant, un indicateur de la qualité du positionnement calculé en fonction de la qualité de réception des signaux de correction et de leur taux de rafraîchissement.

Une deuxième fenêtre apparaît sur les moyens d'affichage qui permet un paramétrage et de calibration en fonction de l'installation des positions des balises. A titre d'exemple, elle permet de définir si les balises sont positionnées longitudinalement ou transversalement par rapport à l'axe du navire, plutôt à la proue ou à la poupe du navire.

Comme indiqué ci-avant, le logiciel permet également de s'interfacer avec les signaux connus de l'homme du métier sous la dénomination de norme NMEA (acronyme anglais de National Marine Electronics Association) et de les interpréter.

Dans un mode de réalisation le logiciel exécute un logiciel tiers de navigation tel que par exemple le logiciel commercialisé par la société Néerlandaise QPS sous la dénomination Qastor et s'interface avec celui-ci pour délivrer les informations spécifiques obtenues par le système selon l'invention.

Dans un autre mode de réalisation, les logiciels est lui-même un logiciel de navigation maritime.

Le pilote commence alors sa navigation et observe l'évolution des indications et paramètres sur les moyens 31 d'affichages de son calculateur 29.

Selon le mode de réalisation de l'invention plus particulièrement décrit ici, le calculateur portable comporte donc des moyens d'acquisition et/ou de stockage de données concernant les spécificités dimensionnelles et de chargement du navire et de données sur son environnement, et des moyens de calcul algorithmique des données de navigation du navire comprenant son cap et sa position par rapport audit environnement, lesdits moyens de calcul algorithmiques étant agencés pour, à partir de ces données concernant les spécificités du navire, du signal de position corrigé toute les premières périodes déterminées et du signal de cap calculé toutes les secondes périodes de temps déterminées, calculer et afficher sur les moyens d'affichage, lesdites données de navigation.

Les moyens 50 de calcul comprennent notamment des informations de topologie marine et la cartographie associée.

En combinant les informations sur le navire et les informations géographiques et contextuelles, en application par exemple du modèle de calcul de squat décrit ci-dessus en référence à la figure 8, les moyens de calcul peuvent déduire un squat réel pour une positon donnée du navire et/ou une estimation du squat à une position probable du navire après une période de temps donnée.

La période de temps donnée est par exemple compatible avec le temps nécessaire pour une manœuvre d'évitement du navire considéré, par exemple inférieur à 2h, par exemple inférieur à 1 heure, par exemple 0.5 heure.

Les moyens de calcul permettent donc d'anticiper des risques liés au squat par un navire dans un futur imminent et permettre de choisir une route maritime alternative plus sûre et/ou un moment de passage plus propice.

A titre d'exemple, la détermination du moment et du lieu de croisement du navire avec un autre bâtiment, données disponibles avec par exemple l'AIS, et l'évaluation du squat probable à ce moment-là, permet de modifier sa vitesse et/ou son cap pour croiser ledit navire dans des circonstances plus favorables.

Les moyens de calcul déterminent donc le squat à prendre en compte pour le navire à partir desdites données d'attitude.

## Revendications

**1.** Balise (16, 16', 71, 71', 75) portable amovible pour système d'aide à la navigation maritime de précision d'un navire (1), comprenant des moyens (24) d'acquisition et de traitement d'un signal satellite de géolocalisation de la balise (16, 16', 71, 71', 75) et des premiers moyens (27) de communication aérienne par ondes électromagnétiques avec une autre balise (16, 16', 71, 71', 75) et/ou avec un calculateur (29) portable muni de moyens (31) d'affichage de données, la balise comprenant un boîtier (17, 17') comprenant un socle (37) de fixation magnétique sur la passerelle (12) dudit navire (1), au moins deux montants (35, 35', 35") dont au moins un de préhension manuelle de la balise par un utilisateur (5) et un chapeau (36) contenant lesdits moyens (24) d'acquisition et de traitement du signal satellite relié audit socle (37) par lesdits montants, lesdits premiers moyens (27) de communication aérienne avec l'autre balise et/ou le calculateur comprenant une première antenne (30, 59) électromagnétique placée dans un desdits montants, la balise comprenant des deuxièmes moyens (39) de communication aérienne par ondes électromagnétiques, de données de correction de position provenant d'émetteur(s) terrestre(s) entièrement situé(s) à distance, comprenant une deuxième antenne (40, 59') électromagnétique placée dans l'un des dits montants, la balise comprenant des troisièmes moyens (46) de communication par ondes électromagnétiques de données externes, comprenant une troisième antenne (47, 59") également placée dans l'un desdits montants, et la balise comprenant des moyens (51) de calcul situés dans le socle (37) de ladite balise, lesdits moyens de calcul (51) étant agencés pour calculer selon une première période déterminée à partir du signal satellite de géolocalisation de la balise, et des données de correction de position, un signal dit de position corrigée, donnant les coordonnées terrestres de ladite balise avec une précision de positionnement géographique inférieure à 1 cm ou lesdits moyens (51) de calcul étant agencés pour calculer selon une seconde période déterminée à partir du signal satellite de géolocalisation de la balise et d'un signal corrigé émis par l'autre balise, un signal dit de cap calculé, donnant le cap avec une précision inférieure à 0.1°, et les premiers moyens (27) de communication étant agencés pour transmettre le signal obtenu de position corrigée ou de cap au calculateur (29) portable pour calcul et affichage.

2. Balise dite de position selon la revendication 1, caractérisé en ce les moyens (51) de calcul sont agencés pour donner le signal de position corrigée.

3. Balise dite de cap selon la revendication 1, **caractérisée en ce que** les moyens (51) de calcul sont agencés pour donner le signal de cap.

4. Balise selon la revendication 2, **caractérisée en ce que** elle comporte une centrale inertielle (66) comprenant des moyens (67) de mesure accélérométrique et/ou gyroscopique (68) du mouvement du navire (1) propres à caractériser des données dites d'attitude du navire (1) et **en ce que** les premiers moyens (27) de transmission sont agencés pour transmettre lesdites données d'attitude au calculateur (29) portable.

5. Balise selon la revendication 4, **caractérisée en ce que** les moyens (51) de calcul sont agencés pour calculer le squat à prendre en compte pour le navire à partir desdites données d'attitude.

6. Balise selon l'une quelconque des revendications précédentes, **caractérisée en ce que** elle comporte au moins trois montants (35, 35', 3"), à savoir un premier montant (35) comprenant la première antenne (30, 59), un deuxième montant (35') comprenant la deuxième antenne (40, 59') et un troisième montant (35") comprenant la troisième antenne (47, 59").

7. Balise selon l'une quelconque des revendications précédentes, **caractérisée en ce que** les moyens (24) d'acquisition et de traitement de signal de géolocalisation sont des moyens d'acquisition GPS, Galileo ou GLONASS sur les fréquences L1 et/ou L2,
   **en ce que** les premiers moyens (27) de communication comprennent une antenne (30, 59) d'émission/réception ultra-haute-fréquence,
   **en ce que** les deuxièmes moyens (39) de communication comprennent une antenne (40, 59') de réception ultra-haute-fréquence et/ou une antenne d'émission/réception GSM,
   et **en ce que** les troisièmes moyens (46) de communication comprennent une antenne (47, 59") de réception très haute fréquence, les données externes étant des signaux VTS et/ou AIS.

8. Balise selon l'une quelconque des revendications précédentes, **caractérisée en ce que** le boîtier de la balise s'inscrit dans un cylindre s'étendant autour d'un axe (57), ledit cylindre délimitant le socle, le chapeau et l'extérieur des montants, lesdits montants formant respectivement des piliers s'étendant axialement en étant répartis angulairement autour de l'axe et formant entre eux latéralement, sur toute leur hauteur et en leur centre, une ou plusieurs parties ajourées permettant la préhension manuelle par l'utilisateur.

9. Balise selon l'une quelconque des revendications précédentes, **caractérisée en ce que** le socle (37) comprend des moyens d'alimentation par batterie (62) démontable par encliquetage.

10. Balise selon l'une quelconque des revendications précédentes, **caractérisée en ce que** le socle comprend des moyens de connexion USB et/ou WIFI, pour mise à jour des paramètres de configuration des moyens de calcul et/ou des premiers, deuxièmes et/ou troisièmes moyens de communication par voie électromagnétique.

11. Système d'aide à la navigation maritime de précision comprenant au moins deux balises (16, 16'), à savoir une balise (16) dite de position et une balise (16') dite de cap, lesdites balises étant agencées pour être placées à distance (e) l'une de l'autre sur la passerelle (12) d'un navire (1), chaque balise (16, 16') comprenant des moyens (24) d'acquisition et de traitement d'un signal satellite de géolocalisation de la balise et des premiers (27) moyens de communication aérienne par ondes électromagnétiques avec l'autre balise et/ou avec un calculateur (29) portable et ledit calculateur (29) portable muni de moyens (31) d'affichage de données, chacune des balises (16, 16') de position et de cap comprenant un boîtier (17, 17') comprenant un socle (37) de fixation magnétique sur la passerelle dudit navire, au moins deux montants (35, 35', 35") dont au moins un de préhension manuelle de ladite balise par un utilisateur (5) et un chapeau (36) contenant lesdits moyens d'acquisition et de traitement du signal satellite relié audit socle par lesdits montants, lesdits premiers moyens (27) de communication aérienne de chaque balise avec l'autre balise et/ou le calculateur (29) comprenant une première (30, 59) antenne électromagnétique placée dans un desdits montants de ladite balise correspondante, la balise de position comprenant des deuxièmes moyens (39) de communication aérienne par ondes électromagnétiques, de données de correction de position provenant d'émetteur(s) terrestre(s) entièrement situé(s) à distance, lesdits deuxièmes moyens comprenant une deuxième antenne (40, 59') électromagnétique placée dans l'un des dits montants de ladite balise de position, des troisièmes moyens (46) de communication par ondes électromagnétiques de données externes, comprenant une troisième antenne (47, 59") également placée dans l'un desdits montants de ladite balise de position, et des moyens (51) de calcul situés dans le socle (37) de ladite balise de position agencés pour calculer selon une première période déterminée à partir du signal satellite de géolocalisation de la balise de position, et des données de correction de position, un signal dit de position corrigée, donnant les coordonnées terrestres de ladite balise de position avec une précision de positionnement géographique inférieure à 1 cm, les premiers moyens de communication de la balise de position étant agencés pour transmettre le signal de position corrigée au calculateur portable, la balise de cap comprenant des deuxièmes moyens de communication agencés pour réceptionner les données corrigées en provenance de la balise de position, des troisièmes moyens de communication par ondes électromagnétiques de données externes comprenant une troisième antenne également placée dans l'un desdits montants de ladite balise de cap, des moyens de calcul situés dans le socle de la balise de cap agencés pour calculer selon une seconde période déterminée à partir du signal satellite de géolocalisation de la balise de cap et d'un signal correspondant aux données corrigées en provenance de la balise de position, un signal dit de cap calculé, donnant le cap avec une précision inférieure à 0.1°, les premiers moyens de communication de la balise de cap étant agencés pour transmettre ledit signal de cap calculé au calculateur portable, et le calculateur portable comprenant des moyens d'acquisition et/ou de stockage de données concernant les spécificités dimensionnelles et de chargement du navire et de données sur son environnement, et des moyens de calcul algorithmique des données de navigation du navire comprenant son cap et sa position par rapport audit environnement, lesdits moyens de calcul algorithmiques étant agencés pour, à partir de ces données concernant les spécificités du navire, du signal de position corrigé toute les premières périodes déterminées et du signal de cap calculé toute les secondes périodes de temps déterminées, calculer et afficher sur les moyens d'affichage, lesdites données de navigation.

12. Système selon la revendication 11, **caractérisé en ce que** la balise de position comporte une centrale inertielle comprenant des moyens de mesure accélérométrique et/ou gyroscopique du mouvement du navire propres à caractériser des données dites d'attitude du navire et **en ce que** les premiers moyens de transmission de ladite balise de position sont agencés pour transmettre lesdites données d'attitude au calculateur portable agencé pour calculer le squat à prendre en compte pour le navire à partir desdites données d'attitude.

13. Système selon l'une quelconque des revendications 11 et 12, **caractérisé en ce que** le boîtier de chaque balise comporte au moins trois montants, à savoir un premier montant comprenant la première antenne, un deuxième montant comprenant la deuxième antenne et un troisième montant comprenant la troisième antenne.

14. Système selon l'une quelconque des revendications 11 à 13, **caractérisé en ce que** chaque boîtier de balise s'inscrit dans un cylindre s'étendant autour d'un axe, ledit cylindre délimitant le socle, le chapeau et l'extérieur des montants, lesdits montants formant respectivement des piliers s'étendant axialement en étant répartis angulairement autour de l'axe et formant entre eux latéralement, sur toute leur hauteur et en leur centre, une ou plusieurs parties ajourées permettant la préhension manuelle par l'utilisateur.

15. Procédé d'aide à la navigation maritime de précision dans lequel on place deux balises (16, 16') à distance (e) l'une de l'autre sur la passerelle (12) d'un navire (1), chaque balise (16, 16') comprenant des moyens (24) d'acquisition et de traitement d'un signal satellite de géolocalisation de la balise et des premiers moyens (27) de communication aérienne par ondes électromagnétiques avec une autre balise et/ou avec un calculateur (29) portable muni de moyens d'affichage (31) de données, on fixe sur la passerelle (12) de façon amovible par aimantation lesdites balises, comprenant une première balise (16) dite de position et une seconde balise (16') dite de cap, chaque balise (16, 16') étant de forme cylindrique ajourée comportant un socle (37) de fixation magnétique sur la passerelle dudit navire, au moins deux montants (35, 35', 35") dont au moins un de préhension manuelle de ladite balise par un utilisateur (5) et un chapeau (36) contenant lesdits moyens d'acquisition et de traitement du signal satellite relié audit socle par lesdits montants, on acquière pour chacune desdites balises sa position par satellite par le biais d'une antenne (26) de géolocalisation située dans le chapeau (36) de ladite balise, on acquière des données de correction de positior provenant d'émetteur(s) terrestre(s) entièrement situé(s) à distance dans la balise de position par le biais d'une deuxième antenne (40, 59') électromagnétique placée dans l'un des dits montants de ladite balise de position, on acquière des données externes par le biais d'une troisième antenne (47, 59") également placée dans l'un desdits montants de ladite balise de position, et on calcule selon une première période déterminée à partir du signal satellite de géolocalisation de la balise de position et des données de correction de position, un signal dit de position corrigée, donnant les coordonnées terrestres de ladite balise de position avec une précision de positionnement géographique inférieure à 1 cm,

on transmet le signal de position corrigée à la balise (16') de cap et au calculateur (29) portable, via une première antenne située dans un des montants, on réceptionne les données corrigées en provenance de la balise de position par le biais d'une deuxième antenne située dans un des montants de ladite balise de cap,

on acquiert des données externes via une troisième antenne également placée dans l'un desdits montants de ladite balise de cap,

on calcule selon une seconde période déterminée à partir du signal satellite de géolocalisation de la balise de cap et d'un signal correspondant aux données corrigées en provenance de la balise de position, un signal dit de cap calculé, donnant le cap avec une précision inférieure à 0.1°,

on transmet le dit signal de cap calculé au calculateur portable,

et, le calculateur portable comportant des moyens d'acquisition et/ou de stockage de données concernant les spécificités dimensionnelles et de chargement du navire et de données sur son environnement, et des moyens de calcul algorithmique des données de navigation du navire comprenant son cap et sa position par rapport audit environnement, on calcule à partir de ces données concernant les spécificités du navire, du signal de position corrigé toutes les premières périodes déterminées et du signal de cap calculé toute les secondes périodes de temps déterminées, lesdites données de navigation que l'on affiche.

16. Procédé selon la revendication 15, **caractérisé en ce que** la balise de position comportant une centrale inertielle comprenant des moyens de mesure accélérométrique et/ou gyroscopique du mouvement du navire propres à caractériser des données dites d'attitude du navire, on transmet lesdites données d'attitude au calculateur portable pour corriger les données de navigation dont la position et le cap du navire.

17. Procédé selon la revendication 16, **caractérisé en ce qu'**on calcule le squat à prendre en compte pour le navire à partir desdites données d'attitude.

18. Procédé selon l'une quelconque des revendications 15 à 17, **caractérisé en ce que** les données d'attitude du navire comprennent au moins l'une des données prises parmi le tangage, le roulis, l'assiette, le gîte, la vitesse, la dérive, la vitesse de dérive.

## Patentansprüche

1. Abnehmbare tragbare Bake (16, 16', 71, 72', 75) für ein Präzisions-Seenavigationshilfssystem eines Schiffs (1), umfassend Mittel (24) für die Erfassung und Verarbeitung eines Satellitensignals für die Ortsbestimmung der Bake (16, 16', 71, 71', 75) und erste Mittel (27) für die Luftkommunikation über elektromagnetische Wellen mit einer anderen Bake (16, 16', 71, 71', 75) und/oder mit einem tragbaren Rechner (29), der mit Datenanzeigemitteln (31) versehen ist, wobei die Bake ein Gehäuse (17, 17') mit einem Sockel (37) zur magnetischen Befestigung an der Kommandobrücke (12) des Schiffs (1) umfasst, mindestens zwei Säulen (35, 35', 35"), darunter mindestens eine zum Greifen der Bake mit der Hand durch einen Benutzer (5), und einen Aufsatz (36), der die Mittel (24) für die Erfassung und Verarbeitung des Satellitensignals enthält und über die Säulen mit dem Sockel (37) verbunden ist, wobei die ersten Mittel (27) für die Luftkommunikation mit der anderen Bake und/oder dem Rechner eine erste in einer der Säulen angeordnete elektromagnetische Antenne (30, 59) umfassen,

   wobei die Bake zweite Mittel (39) für die über elektromagnetische Wellen erfolgende Luftkommunikation von Positionsberichtigungsdaten aus einem oder mehreren vollständig entfernten terrestrischen Sendern umfasst, welche eine zweite in einer der Säulen angeordnete elektromagnetische Antenne (40, 59') umfassen, die Bake dritte Mittel (46) für die über elektromagnetische Wellen erfolgende Luftkommunikation von externen Daten umfasst, welche eine dritte, ebenfalls in einer der Säulen angeordnete Antenne (47, 59") umfassen, und wobei die Bake in dem Sockel (37) der Bake angeordnete Rechenmittel (51) umfasst,

   wobei die Rechenmittel (51) angeordnet sind, um gemäß einer ersten, anhand des Satellitensignals für die Ortsbestimmung der Bake und von Positionsberichtigungsdaten bestimmten Periode ein sogenanntes Signal für korrigierte Position zu berechnen, welches die terrestrischen Koordinaten der Bake mit einer Genauigkeit der geografischen Lage angibt, die geringer als 1 cm ist, oder

   wobei die Rechenmittel (51) angeordnet sind, um gemäß einer zweiten, anhand des Satellitensignals für die Ortsbestimmung der Bake und eines von der anderen Bake gesendeten korrigierten Signals bestimmten Periode ein so genanntes Signal für berechneten Kurs zu berechnen, welches den Kurs mit einer Genauigkeit von weniger als 0.1° angibt, und

   wobei die ersten Kommunikationsmittel (27) angeordnet sind, um das erhaltene Signal für korrigierte Position oder Kurssignal an den tragbaren Rechner (29) zum Rechnen und Anzeigen zu übermitteln.

**2.** Sogenannte Positionsbake nach Anspruch 1,
**dadurch gekennzeichnet,**
**dass** die Rechenmittel (51) angeordnet sind, um das Signal für korrigierte Position zu liefern.

**3.** Sogenannte Kursbake nach Anspruch 1,
**dadurch gekennzeichnet,**
**dass** die Rechenmittel (51) angeordnet sind, um das Kurssignal zu liefern.

**4.** Bake nach Anspruch 2,
**dadurch gekennzeichnet,**
**dass** sie ein Inertialsystem (66) aufweist, das Mittel (67) zur Beschleunigungs- und/oder gyroskopischen Messung (68) der Bewegung des Schiffs (1) umfasst, welche geeignet sind, sogenannte Lagedaten des Schiffs (1) zu charakterisieren, und dass die ersten Übertragungsmittel (27) angeordnet sind, um dem tragbaren Rechner (29) die Lagedaten zu übermitteln.

**5.** Bake nach Anspruch 4,
**dadurch gekennzeichnet,**
**dass** die Rechenmittel (51) angeordnet sind, um anhand der Lagedaten den für das Schiff zu berücksichtigenden Squat zu berechnen.

**6.** Bake nach einem der vorhergehenden Ansprüche,
**dadurch gekennzeichnet,**
**dass** sie mindestens drei Säulen (35, 35', 35") aufweist, und zwar eine erste Säule (35) mit der ersten Antenne (30, 59), eine zweite Säule (35') mit der zweiten Antenne (40, 59') und eine dritte Säule (35") mit der dritten Antenne (47, 59").

**7.** Bake nach einem der vorhergehenden Ansprüche,
**dadurch gekennzeichnet,**
**dass** die Mittel (24) für die Erfassung und Verarbeitung eines Ortsbestimmungssignals GPS-, Galileo- oder GLONASS-Erfassungsmittel mit den Frequenzen L1 und/oder L2 sind, dass die ersten Kommunikationsmittel (27) eine Ultrahochfrequenz-Sende/Empfangsantenne (30, 59) umfassen, dass die zweiten Kommunikationsmittel (39) eine Ultrahochfrequenz-Empfangsantenne (40, 59') und/oder eine GSM-Sende/Empfangsantenne, und dass die dritten Kommunikationsmittel (46) eine Empfangsantenne (47, 59") mit sehr hoher Frequenz umfassen, wobei die externen Daten VTS- und/oder AIS-signale sind.

**8.** Bake nach einem der vorhergehenden Ansprüche,
**dadurch gekennzeichnet,**
**dass** das Gehäuse der Bake von einem Zylinder eingeschlossen ist, der sich um eine Achse (57) erstreckt, wobei der Zylinder den Sockel, den Aufsatz und den Außenbereich der Säulen begrenzt, wobei die Säulen jeweils Stützen bilden, die sich axial erstrecken und winkelig um die Achse verteilt sind und miteinander seitlich auf ihrer gesamten Höhe und in ihrer Mitte einen oder mehrere durchbrochene Bereiche bilden, die das Greifen mit der Hand durch den Benutzer ermöglichen.

**9.** Bake nach einem der vorhergehenden Ansprüche,
**dadurch gekennzeichnet,**
**dass** der Sockel (37) Mittel für die Versorgung durch eine Batterie (62) umfasst, welche durch Einrasten abgenommen werden kann.

**10.** Bake nach einem der vorhergehenden Ansprüche,
**dadurch gekennzeichnet,**
**dass** der Sockel USB- und/oder WIFI-Verbindungsmittel umfasst, um die Konfigurationsparameter der Rechenmittel und/oder der ersten, zweiten und/oder dritten Kommunikationsmittel elektromagnetisch zu aktualisieren.

**11.** Präzisions-Seenavigationshilfssystem mit mindestens zwei Baken (16, 16'), und zwar eine sogenannte Positionsbake (16) und eine sogenannte Kursbake (16'), wobei die Baken angeordnet sind, um in einem Abstand (e) voneinander beabstandet auf der Kommandobrücke (12) eines Schiffs (1) platziert zu werden, wobei jede Bake (16, 16') Mittel (24) für die Erfassung und Verarbeitung eines Satellitensignals für die Ortsbestimmung der Bake und erste Mittel (27) für die Luftkommunikation über elektromagnetische Wellen mit der anderen Bake und/oder mit einem tragbaren Rechner (29) umfasst, und wobei der Rechner (29) mit Datenanzeigemitteln (31) versehen ist, wobei die jeweilige Positions- und Kursbake (16, 16') ein Gehäuse (17, 17') mit einem Sockel (37) zur magnetischen Befestigung an der Kommandobrücke des Schiffs umfasst, mindestens zwei Säulen (35, 35', 35"), darunter mindestens eine zum Greifen der Bake mit der Hand durch einen Benutzer (5), und einen Aufsatz (36), der die Mittel für die Erfassung und Verarbeitung des Satellitensignals enthält und über die Säulen mit dem Sockel (37) verbunden ist, wobei die ersten Mittel (27) für die Luftkommunikation mit der anderen Bake und/oder dem Rechner (29) eine erste in einer der Säulen der entsprechenden Bake angeordnete elektromagnetische Antenne (30, 59) umfassen, wobei die Positionsbake umfasst:

zweite Mittel (39) für die über elektromagnetische Wellen erfolgende Luftkommunikation von Positionsberichtigungsdaten aus einem oder mehreren vollständig entfernten terrestrischen Sendern, welche zweiten Mittel eine zweite in einer der Säulen der Positionsbake angeordnete elektromagnetische Antenne (40, 59') umfassen, dritte Mittel (46) für die über elektromagnetische Wellen erfolgende Luftkommunikation von externen Daten, welche eine dritte, ebenfalls in einer der Säulen der Positionsbake angeordnete Antenne (47, 59") umfassen, und in dem Sockel (37) der Positionsbake angeordnete Rechenmittel (51), welche angeordnet sind, um gemäß einer ersten, anhand des Satellitensignals für die Ortsbestimmung der Positionsbake und von Positionsberichtigungsdaten bestimmten Periode ein sogenanntes Signal für korrigierte Position zu berechnen, welches die terrestrischen Koordinaten der Positionsbake mit einer Genauigkeit der geografischen Lage angibt, die geringer als 1 cm ist,

**wobei** die ersten Kommunikationsmittel der Positionsbake angeordnet sind, um dem tragbaren Rechner das Signal für korrigierte Position zu übermitteln, wobei die Kursbake umfasst:

zweite Kommunikationsmittel, die angeordnet sind, um die korrigierten Daten von der Positionsbake zu empfangen, dritte Mittel für die über elektromagnetische Wellen erfolgende Kommunikation externer Daten, umfassend eine dritte, ebenfalls in einer der Säulen der Kursbake angeordnete Antenne, Rechenmittel in dem Sockel der Kursbake, welche angeordnet sind, um gemäß einer zweiten, anhand des Satellitensignals für die Ortsbestimmung der Kursbake und eines den korrigierten Daten von der Positionsbake entsprechenden Signals bestimmten Periode ein so genanntes Signal für berechneten Kurs zu berechnen, welches den Kurs mit einer Genauigkeit von weniger als 0.1° angibt, wobei die ersten Kommunikationsmittel der Kursbake angeordnet sind, um dem tragbaren Rechner das Signal für berechneten Kurs zu übermitteln, und wobei der tragbare Rechner Mittel für die Erfassung und/oder Speicherung von Daten über die Dimensions- und Ladeeigenschaften des Schiffs und von Daten über seine Umgebung umfasst und Mittel für die algorithmische Berechnung der Navigationsdaten des Schiffs umfassend seinen Kurs und seine Position in Bezug auf die Umgebung, wobei die Mittel für die algorithmische Berechnung angeordnet sind, um anhand dieser Daten über die Eigenschaften des Schiffs, des Signals für alle ersten bestimmten Perioden korrigierte Position und des Signals für alle zweiten bestimmten Zeitperioden berechneten Kurs die Navigationsdaten zu berechnen und an den Anzeigemitteln anzuzeigen.

12. System nach Anspruch 11,
**dadurch gekennzeichnet,**
**dass** die Positionsbake ein Inertialsystem aufweist, das Mittel zur Beschleunigungs- und/oder gyroskopischen Messung der Bewegung des Schiffs umfasst, welche geeignet sind, sogenannte Lagedaten des Schiffs zu charakterisieren, und dass die ersten Übertragungsmittel der Positionsbake angeordnet sind, um die Lagedaten an den tragbaren Rechner zu übermitteln, welcher ausgestaltet ist, um anhand der Lagedaten den für das Schiff zu berücksichtigenden Squat zu berechnen.

13. System nach einem der Ansprüche 11 und 12,
**dadurch gekennzeichnet,**
**dass** das Gehäuse der jeweiligen Bake mindestens drei Säulen aufweist, und zwar eine erste Säule mit der ersten Antenne, eine zweite Säule mit der zweiten Antenne und eine dritte Säule mit der dritten Antenne.

14. System nach einem der Ansprüche 11 bis 13,
**dadurch gekennzeichnet,**
**dass** das jeweilige Bake-Gehäuse von einem Zylinder eingeschlossen ist, der sich um eine Achse erstreckt, wobei der Zylinder den Sockel, den Aufsatz und den Außenbereich der Säulen begrenzt, wobei die Säulen jeweils Stützen bilden, die sich axial erstrecken und winkelig um die Achse verteilt sind und miteinander seitlich auf ihrer gesamten Höhe und in ihrer Mitte einen oder mehrere durchbrochene Bereiche bilden, die das Greifen mit der Hand durch den Benutzer ermöglichen.

15. Präzisions-Seenavigationshilfsverfahren, bei dem zwei Baken (16, 16') um in einem Abstand (e) voneinander beabstandet auf der Kommandobrücke (12) eines Schiffs (1) platziert werden, wobei jede Bake (16, 16') Mittel (24) für die Erfassung und Verarbeitung eines Satellitensignals für die Ortsbestimmung der Bake und erste Mittel (27) für die Luftkommunikation über elektromagnetische Wellen mit einer anderen Bake und/oder mit einem mit Datenanzeigemitteln (31) versehenen tragbaren Rechner (29) umfasst,
auf der Kommandobrücke (12) die Baken abnehmbar und magnetisch befestigt werden, welche eine erste sogenannte Positionsbake (16) und eine zweite sogenannte Kursbake (16') umfassen, wobei die jeweilige Bake (16, 16') eine zylindrische durchbrochene Form aufweist mit einem Sockel (37) zur magnetischen Befestigung an der Kommandobrücke des Schiffs, mindestens zwei Säulen (35, 35', 35"), darunter mindestens eine zum Greifen der Bake mit der Hand durch einen Benutzer (5), und einem Aufsatz (36), der die Mittel für die Erfassung und Verarbeitung des Satellitensignals enthält und über die Säulen mit dem Sockel verbunden ist,
für die jeweilige Bake ihre Position per Satellit über eine in dem Aufsatz (36) der Bake angeordnete Ortsbestimmungsantenne (26) erfasst wird,
in der Positionsbake über eine zweite, in einer der Säulen der Positionsbake angeordnete elektromagnetische Antenne (40, 59') Positionsberichtigungsdaten aus einem oder mehreren vollständig entfernten terrestrischen Sendern erfasst werden,
externe Daten über eine dritte, ebenfalls in einer der Säulen der Positionsbake angeordnete Antenne (47, 59") erfasst werden, und
gemäß einer ersten, anhand des Satellitensignals für die Ortsbestimmung der Positionsbake und von Positionsberichtigungsdaten bestimmten Periode ein sogenanntes Signal für korrigierte Position berechnet wird, welches die terrestrischen Koordinaten der Positionsbake mit einer Genauigkeit der geografischen Lage angibt, die geringer als 1 cm ist,
der Kursbake (16') und dem tragbaren Rechner (29) das Signal für korrigierte Position über eine erste in einer der Säulen angeordnete Antenne übermittelt wird,
die korrigierten Daten von der Positionsbake über eine zweite, in einer der Säulen der Kursbake angeordnete Antenne empfangen werden, externe Daten über eine dritte, ebenfalls in einer der Säulen der Kursbake angeordnete Antenne erfasst werden,
gemäß einer zweiten, anhand des Satellitensignals für die Ortsbestimmung der Kursbake und eines den korrigierten Daten von der Positionsbake entsprechenden Signals bestimmten Periode ein so genanntes Signal für berechneten Kurs berechnet wird, welches den Kurs mit einer Genauigkeit von weniger als 0.1° angibt,
dem tragbaren Rechner das Signal für berechneten Kurs übermittelt wird, und, wobei der tragbare Rechner Mittel für die Erfassung und/oder Speicherung von Daten über die Dimensions- und Ladeeigenschaften des Schiffs und von Daten über seine Umgebung umfasst und Mittel für die algorithmische Berechnung der Navigationsdaten des Schiffs umfassend seinen Kurs und seine Position in Bezug auf die Umgebung, anhand dieser Daten über die Eigenschaften des Schiffs, des Signals für alle ersten bestimmten Perioden korrigierte Position und des Signals für alle zweiten bestimmten Zeitperioden berechneten Kurs die Navigationsdaten berechnet werden, die angezeigt werden.

16. Verfahren nach Anspruch 15,
**dadurch gekennzeichnet,**
**dass**, wobei die Positionsbake ein Inertialsystem aufweist, das Mittel zur Beschleunigungs- und/oder gyroskopischen Messung der Bewegung des Schiffs umfasst, welche geeignet sind, sogenannte Lagedaten des Schiffs zu charakterisieren, die Lagedaten an den tragbaren Rechner übermittelt werden, um die Navigationsdaten, darunter Position und Kurs des Schiffs, zu korrigieren.

17. Verfahren nach Anspruch 16,
**dadurch gekennzeichnet,**
**dass** der für das Schiff zu berücksichtigende Squat anhand der Lagedaten berechnet wird.

18. Verfahren nach einem der Ansprüche 15 bis 17,
**dadurch gekennzeichnet,**
**dass** die Lagedaten des Schiffs mindestens eines der Daten aus Stampfen, Rollen, Trimm, Neigung, Geschwindigkeit, Abdrift, Driftgeschwindigkeit.

**Claims**

1. Removable portable beacon (16, 16', 71, 71', 75) for system of aid to the precision maritime navigation of a ship (1), comprising means (24) for the acquisition and processing of a satellite signal for geolocation of the beacon (16, 16', 71, 71', 75) and first means (27) of aerial communication by electromagnetic waves with another beacon (16, 16', 71, 71', 75) and/or with a portable calculator (29) equipped with data display means (31),
the beacon including
a housing (17, 17')
including a base (37) for magnetic fixing to the bridge (12) of said ship (1), at least two posts (35, 35', 35") including at least one for manual gripping of the beacon by a user (5) and a cap (36) containing said means (24) for the acquisition and processing of the satellite signal connected to said base (37) by said posts,
said first means (27) of aerial communication with the other beacon and/or the calculator comprising a first electromagnetic antenna (30, 59) placed in one of said posts,
the beacon comprising second means (39) of aerial communication, by electromagnetic waves, of position correction data arriving from terrestrial transmitter(s) situated entirely remotely, comprising a second electromagnetic antenna (40, 59') placed in one of said posts,
the beacon comprising third means (46) of communication by electromagnetic waves of external data, comprising a third antenna (47, 59") also placed in one of said posts, and
the beacon comprising means of calculation (51) situated in the base (37) of said beacon,
said means of calculation (51) being arranged to calculate a so-called corrected-position signal according to a first period determined on the basis of the satellite signal for geolocation of the beacon and the position correction data, giving the terrestrial coordinates of said beacon with a precision of geographical positioning lower than 1 cm
or said means of calculation (51) being arranged to calculate a so-called calculated course signal according to a second period determined on the basis of the satellite signal for geolocation of the beacon and a corrected signal transmitted by the other beacon, giving the course with a precision lower than 0.1°,
and the first means of communication (27) being arranged to transmit the corrected-position or course signal obtained to the portable calculator (29) for calculation and display.

2. So-called position-indicating beacon according to claim 1, **characterised in that** the means of calculation (51) are arranged to give the corrected-position signal.

3. So-called course-indicating beacon according to claim 1, **characterised in that** the means of calculation (51) are arranged to give the course signal.

4. Beacon according to claim 2, **characterised in that** it comprises an inertial unit (66) including means for accelerometric measurement (67) and/or gyroscopic measurement (68) of the movement of the ship (1) capable of characterising so-called attitude data of the ship (1) and **in that** the first means of transmission (27) are arranged to transmit said attitude data to the portable calculator (29).

5. Beacon according to claim 4, **characterised in that** the means of calculation (51) are arranged to calculate the squat to be taken into account for the ship on the basis of said attitude data.

6. Beacon according to any one of the preceding claims, **characterised in that** it comprises at least three posts (35, 35', 35"), namely a first post (35) including the first antenna (30, 59), a second post (35') including the second antenna (40, 59') and a third post (35") including the third antenna (47, 59").

7. Beacon according to any one of the preceding claims, **characterised in that** the means (24) for the acquisition and processing of a geolocation signal are means of GPS, Galileo or GLONASS acquisition at the frequencies L1 and/or L2,
**in that** the first means of communication (27) include an ultra high frequency transmission/reception antenna (30, 59),
**in that** the second means of communication (39) include an ultra high frequency reception antenna (40, 59') and/or a GSM transmission/reception antenna,
and **in that** the third means of communication (46) include a very high frequency reception antenna (47, 59"), the external data being VTS and/or AIS signals.

8. Beacon according to any one of the preceding claims, **characterised in that** the housing of the beacon is part of a cylinder extending around an axis (57), said cylinder delimiting the base, the cap and the exterior of the posts, said posts respectively forming pillars that extend axially while being distributed angularly about the axis and forming between them laterally, over their full height and at their centre, one or more apertured parts that allow manual gripping by the user.

9. Beacon according to any one of the preceding claims, **characterised in that** the base (37) includes battery supply means (62) that can be dismounted by click and lock.

10. Beacon according to any one of the preceding claims, **characterised in that** the base includes USB and/or Wi-Fi connection means, for updating the configuration parameters of the means of calculation and/or the first, second and/or third means of electromagnetic communication.

11. System of aid to precision maritime navigation including at least two beacons (16, 16'), namely a so-called position-indicating beacon (16) and a so-called course-indicating beacon (16'), said beacons being arranged so as to be placed at a distance (e) from each other on the bridge (12) of a ship (1), each beacon (16, 16') including means (24) for the acquisition and processing of a satellite signal for geolocation of the beacon, and first means (27) of aerial communication by electromagnetic waves with the other beacon and/or with a portable calculator (29) and said portable calculator (29) equipped with data display means (31),
each of the position-indicating and course-indicating beacons (16, 16') including a housing (17, 17') including a base (37) for magnetic fixing to the bridge of said ship, at least two posts (35, 35', 35") including at least one for manual gripping of said beacon by a user (5) and a cap (36) containing said means for the acquisition and processing of the satellite signal connected to said base by said posts,
said first means (27) of aerial communication of each beacon with the other beacon and/or the calculator (29) including a first electromagnetic antenna (30, 59) placed in one of said posts of said corresponding beacon,
the position-indicating beacon including second means (39) of aerial communication by electromagnetic waves of position-correction data arriving from terrestrial transmitter(s) situated wholly remotely, said second means including a second electromagnetic antenna (40, 59') placed in one of said posts of said position-indicating beacon,
third means (46) of communication by electromagnetic waves of external data, including a third antenna (47, 59") also placed in one of said posts of said position-indicating beacon, and
means of calculation (51) situated in the base (37) of said position-indicating beacon, arranged to calculate a so-called corrected-position signal according to a first period determined on the basis of the satellite signal for geolocation of the position-indicating beacon and the position correction data, giving the terrestrial coordinates of said position-indicating beacon with a geographical positioning precision lower than 1 cm,
the first means of communication of the position-indicating beacon being arranged to transmit the corrected-position signal to the portable calculator,
the course-indicating beacon including
second means of communication arranged to receive the corrected data arriving from the position-indicating beacon, third means of communication by electromagnetic waves of external data including a third antenna also placed in one of said posts of said course-indicating beacon, means of calculation situated in the base of the course-indicating beacon arranged to calculate a so-called calculated course signal according to a second period determined on the basis of the satellite signal for geolocation of the course-indicating beacon and a signal corresponding to the corrected data arriving from the position-indicating beacon, giving the course with a precision lower than 0.1°, the first means of communication of the course-indicating beacon being arranged to transmit said calculated course signal to the portable calculator,
and the portable calculator including means for the acquisition and/or storage of data concerning the dimensional and loading characteristics of the ship and data on its environment, and means for algorithmic calculation of the navigation data of the ship including its course and its position in relation to said environment, said means of algorithmic calculation being arranged to calculate said navigation data, on the basis of these data concerning the characteristics of the ship, the position signal corrected every first determined period and the course signal calculated every second determined period of time, and to display them on the display means.

12. System according to claim 11, **characterised in that** the position-indicating beacon comprises an inertial unit including means for accelerometric and/or gyroscopic measurement of the movement of the ship capable of characterising so-called attitude data of the ship and **in that** the first means of transmission of said position-indicating beacon are arranged to transmit said attitude data to the portable calculator arranged to calculate the squat to be taken into account for the ship on the basis of said attitude data.

13. System according to any one of claims 11 and 12, **characterised in that** the housing of each beacon comprises at least three posts, namely a first post including the first antenna, a second post including the second antenna and a third post including the third antenna.

**14.** System according to any one of claims 11 to 13, **characterised in that** each beacon housing is part of a cylinder extending around an axis, said cylinder delimiting the base, the cap and the exterior of the posts, said posts respectively forming pillars extending axially while being distributed angularly about the axis and forming between them laterally, over their full height and at their centre, one or more apertured parts allowing manual gripping by the user.

**15.** Method of aiding precision maritime navigation in which two beacons (16, 16') are placed at a distance (e) from each other on the bridge (12) of a ship (1), each beacon (16, 16') including means (24) for the acquisition and processing of a satellite signal for geolocation of the beacon and first means (27) of aerial communication by electromagnetic waves with another beacon and/or with a portable calculator (29) equipped with data display means (31),
said beacons are fixed to the bridge (12) removably by magnetisation, including a first so-called position-indicating beacon (16) and a second so-called course-indicating beacon (16'), each beacon (16, 16') having an apertured cylindrical form comprising a base (37) for magnetic fixing to the bridge of said ship, at least two posts (35, 35', 35") including at least one for manual gripping of said beacon by a user (5) and a cap (36) containing said means for the acquisition and processing of the satellite signal connected to said base by said posts,
for each of said beacons its position is acquired by satellite by means of a geolocation antenna (26) situated in the cap (36) of said beacon,
position correction data arriving from terrestrial transmitter(s) situated entirely remotely are acquired in the position-indicating beacon by means of a second electromagnetic antenna (40, 59') placed in one of said posts of said position-indicating beacon,
external data are acquired by means of a third antenna (47, 59") also placed in one of said posts of said position-indicating beacon, and
a so-called corrected-position signal is calculated according to a first period determined on the basis of the satellite signal for geolocation of the position-indicating beacon and the position correction data, giving the terrestrial coordinates of said position-indicating beacon with a geographical positioning precision lower than 1 cm,
the corrected-position signal is transmitted to the course-indicating beacon (16') and to the portable calculator (29), via a first antenna situated in one of the posts, the corrected data arriving from the position-indicating beacon are received by means of a second antenna situated in one of the posts of said course-indicating beacon, external data are acquired via a third antenna also placed in one of said posts of said course-indicating beacon,
a so-called calculated course signal is calculated according to a second period determined on the basis of the satellite signal for geolocation of the course-indicating beacon and a signal corresponding to the corrected data arriving from the position-indicating beacon, giving the course with a precision lower than 0.1°,
said calculated course signal is transmitted to the portable calculator, and, the portable calculator comprising means for the acquisition and/or storage of data concerning the dimensional and load characteristics of the ship and data on its environment, and means for algorithmic calculation of the navigation data of the ship including its course and its position in relation to said environment, said navigation data are calculated on the basis of these data concerning the characteristics of the ship, the position signal corrected every first determined period and the course signal calculated every second determined period of time, and displayed.

**16.** Method according to claim 15, **characterised in that** the position-indicating beacon comprising an inertial unit including means for accelerometric and/or gyroscopic measurement of the movement of the ship capable of characterising so-called attitude data of the ship, said attitude data are transmitted to the portable calculator in order to correct the navigation data including the position and course of the ship.

**17.** Method according to claim 16, **characterised in that** the squat to be taken into account for the ship is calculated on the basis of said attitude data.

**18.** Method according to any one of claims 15 to 17, **characterised in that** the attitude data of the ship include at least one of the data selected from among pitching, rolling, trim, list, speed, drift and speed of drift.

Fig.1

Fig.1A

EP 3 577 494 B1

Fig.2

# Fig.3

Fig.4A

Fig.4B

# Fig.5A

# Fig.5B

# Fig.6

| Ves. Pos. | 17°53'.995 N 062°52'.016 w | COG SOG. | 310°T | 5.5 Kts | Pas de radar | Squat:0,5m |

**Fig.7**

**Fig.8A**

**Fig.8B**

# Fig.9

| EQUILIBRE ET STABILITE | | | | | | | | |
|---|---|---|---|---|---|---|---|---|

## CONDITION: PLAINE CHARGE - NAVIRE CARGO

| Comportement | Contenance | Coefficient d'arrivage | Poids | KG | Moment Vertical | Carène Liquide | LCG foap | Moment Longitudinal |
|---|---|---|---|---|---|---|---|---|
| | m³ | m³/L | t | m | tm | tm | m | tm |
| Totalité | 14.562 | 1.86 | | 6.78 | | | 73.15 | |
| 1TD | 264 | 2.48 | | 10.71 | | | 114.33 | |
| 2TD | 1688 | 2.74 | | 10.60 | | | 93.57 | |
| 3TD | 1986 | 2.72 | | 10.51 | | | 63.92 | |
| | | | | | | | | |
| Consomables | | | 1464 | – | 4112 | 2560 | – | 58.675 |
| | | | | | | | | |
| | | | | | | | | |
| Poids mort | | | | | | | | |
| Bateau-phare | | | 3831 | 8.21 | | | 61.67 | |
| DEPLACEMENT | | | | | | | | |

| HYDROSTATIQUES | Calaison exact | | | |
|---|---|---|---|---|
| | | | LCB foap | LCF foap |
| LONGUER     130.00m | MCTC | | | |
| ASSIETE | | | | KM$_T$ |
| | | | | KG |
| CALAISON :   F,                                    A. | | | | GM$_{fluid}$ |

**Fig.10A**

**Fig.10B**

Pas de squat
$V_2 = 0$

**Fig.10C**

$y = c-mx$
Pourcentage = 150-(10xV)

**Fig.10D**

32

**RÉFÉRENCES CITÉES DANS LA DESCRIPTION**

**Littérature non-brevet citée dans la description**

- **MAARTEN BETLEM.** Contirbution Dutch Pilot Association. *SEMINAR OF THE HYDROGRAPHIC SOCIETY: PPUS AND ELECTRONIC CHARTS - WHAT DOES THE USER REALLY NEEDS*